# EUROPEAN PATENT APPLICATION

(11) **EP 4 850 909 A1**
(43) Date of publication of application: **09.12.2026**
(21) Application number: 25775814.4
(22) Date of filing: 04.03.2025
(51) Int. Cl.: B32B 27/32, B32B 9/00, B65D 65/40

(54) **LAMINATE, COMPOSITE LAMINATE, AND PACKAGING BODY INCLUDING SAME**

(30) Priority: 26.03.2024 JP 2024049386
(71) Applicant: Toray Advanced Film Co., Ltd., Tokyo 103-0022 (JP)
(72) Inventor: SATO, Yoshikazu, Tokyo 103-0021 (JP); KUSAMA, Shinya, Iwase-gun, Fukushima 969-0402 (JP); TSUMURAYA, Mitsuhiro, Iwase-gun, Fukushima 969-0402 (JP)
(74) Representative: Prüfer & Partner mbB Patentanwälte · Rechtsanwälte
(86) International application number: PCT/JP2025/007607
(87) International publication number: WO 2025/204554

(57) **Abstract**

The present invention provides: a laminate that has excellent gas barrier properties and that is suitable for recycling; and a packaging body that uses the laminate. Provided is a laminate in which an inorganic layer and a protective layer are laminated in this order on one side of an olefin-based substrate film, wherein the protective layer contains a water soluble resin and a silicon alkoxide, and the average composition ratio (Si/C) of elemental silicon (Si) to elemental carbon (C) is 1.30-2.30 as measured via X-ray photoelectron spectroscopy (XPS) in the thickness direction to 1/3 of the thickness of the protective layer from the protective layer surface side on the opposite side from the inorganic layer side.

## Description

### TECHNICAL FIELD

The present invention relates to a laminated body and a composite laminated body that exhibit good gas barrier properties and are high in recyclability, and a packaging including the same.

### BACKGROUND ART

Various packaging materials have been used for the packaging of various items such as foods, beverages, pharmaceuticals, and daily necessaries. These packaging materials are required to have good oxygen barrier properties and water vapor barrier properties in order to prevent deterioration of the contents. Aluminum foil, which exhibits good gas barrier properties, has been used as a packaging material for retort food products. However, packaging materials that incorporate aluminum foil are difficult to handle in recycling them, which limits their applications.

Packaging materials incorporating films in which aluminum or aluminum oxide is vapor-deposited to form gas barrier layers on thermoplastic films such as polyester film by a physical vapor deposition technique such as vacuum vapor deposition have also been proposed. For boil and retort food applications where the assumed usage environment is harsh, there are some proposals in which a protective layer is laminated on a gas barrier layer for the purpose of preventing a decrease in gas barrier performance, wherein a specific elemental composition is applied to the protective layer or a specific water soluble polymer is applied thereto. However, since these gas barriers are in the form of laminations with a polyester film or other resin films, they are still considered to be disadvantageous from the viewpoint of recycling (Patent documents 1, 2, and 3).

In order to improve recyclability, packaging materials that include films of olefin based substances such as polyethylene and polypropylene have been proposed. For example, there has been a proposed material that is produced by forming a layer of a specific resin on an olefin based film, depositing a gas barrier layer of a metal or an inorganic compound thereon, and further laying a protective layer having a specific elemental composition including a metal alkoxide thereon (Patent document 4). In addition, there has also been a proposed material that is produced by forming an undercoat layer on a multilayer laminated olefin based substrate, depositing a gas barrier layer of an inorganic compound or the like thereon, and further laying a protective layer including a metal alkoxide thereon (Patent Document 5).

Furthermore, a so-called single material (monomaterial) packaging, which is produced by combining components of the same type suitable for recycling, has been proposed (Patent document 4). In addition, there has also been a proposed monomaterial packaging that includes a combination of components having different heat shrinkage rates that are laminated in a specific order suitable for producing the monomaterial packaging (Patent documents 6 and 7).

### PRIOR ART DOCUMENTS

### PATENT DOCUMENTS

Patent document 1: Japanese Patent No. 7097011
Patent document 2: International Publication WO 2024/111477
Patent document 3: Japanese Patent No. 7089709
Patent document 4: Japanese Patent No. 7331537
Patent document 5: Japanese Patent No. 7377425
Patent document 6: Japanese Patent No. 7088138
Patent document 7: Japanese Patent No. 7231095

### SUMMARY OF INVENTION

### PROBLEMS TO BE SOLVED BY THE INVENTION

All of these patent documents employ an olefin based film or substrate in order to improve recyclability. However, olefin based materials have issues with heat resistance and mechanical properties and therefore, if some of the conventional technologies disclosed in these patent documents are combined, problems are likely to occur such as deformation of the olefin based film or substrate that may cause cracks in the layers laminated on the substrate and deterioration in the gas barrier properties and adhesiveness after a humidity and heat resistance test. Thus, there have been demands for materials that can be suitably applied to boil and retort food products likely to be exposed to severe usage environments.

In view of these problems, the main object of the present invention is to provide a method for stable production of a laminated structure having good gas barrier properties and high adhesiveness and a packaging including such a laminated structure, which was realized by clarifying an optimum form of such a laminated structure.

### MEANS OF SOLVING THE PROBLEMS

The laminated body according to the present invention is a laminated body that includes an inorganic layer and a protective layer laminated in this order on one side of an olefin based substrate film, wherein the protective layer contains a water soluble resin and a silicon alkoxide and also wherein the average composition ratio (Si/C) of the silicon element (Si) to the carbon element (C), as measured by X-ray photoelectron spectroscopy (XPS) in the depth direction of the protective layer from the surface of the protective layer opposite to the inorganic layer up to one-third of the total thickness thereof, is in the range of 1.30 to 2.30.

It is also a laminated body as set forth above, wherein the protective layer further includes a linear polysiloxane.

It is also a laminated body as set forth above, wherein the silicon alkoxide includes a silicon alkoxide having a ureido group.

It is also a laminated body as set forth above, wherein an anchor layer is present between the olefin based substrate film and the inorganic layer.

It is also a laminated body as set forth above, wherein the inorganic layer includes aluminum (Al) and/or silicon (Si).

It is also a laminated body as set forth above, wherein the silicon alkoxide having a ureido group accounts for a solid content of 2.5 mass% or more relative to the total solid content of the protective layer.

It is also a laminated body as set forth above, wherein the mass ratio of the linear polysiloxane to the silicon alkoxide present in the protective layer, each represented in terms of SiO₂, is in the linear polysiloxane/silicon alkoxide ratio range of 15/85 to 90/10.

It is also a laminated body as set forth above, wherein the protective layer has a thickness of 100 to 1,000 nm.

It is also a laminated body as set forth above, wherein the inorganic layer contains aluminum oxide.

Furthermore, it is a composite laminated body including a second olefin layer containing an olefin based resin laminated on at least one side of the laminated body with a resin layer interposed in between.

It is also a composite laminated body as set forth above, wherein the heat shrinkage rate after heating at 120°C for 15 minutes of the second olefin layer is smaller than that of the laminated body.

It is also a composite laminated body as set forth above, wherein a third olefin layer containing an olefin based resin is further laminated on at least either of the laminated body side surface and/or the second olefin layer side surface of the composite laminated body with a resin layer interposed in between.

It is also a composite laminated body as set forth above, wherein the heat shrinkage rate after heating at 120°C for 15 minutes of either or both of the second olefin layer and the third olefin layer is smaller than that of the laminated body.

It also provides a packaging including a laminated body as set forth in any one of the above paragraphs and/or a composite laminated body as set forth in any one of the above paragraphs.

### ADVANTAGEOUS EFFECTS OF THE INVENTION

The present invention can provide a laminated body having good gas barrier properties and high recyclability, and a packaging including the same.

### DESCRIPTION OF PREFERRED EMBODIMENTS

The laminated body according to the present invention will be described in more detail below.

The laminated body according to the present invention is a laminated body that includes at least an inorganic layer and a protective layer laminated on one side of an olefin based substrate film, wherein the protective layer contains a water soluble resin and/or a silicon alkoxide and also wherein the average of the composition ratio (Si/C) of the silicon element (Si) to the carbon element (C), as measured by X-ray photoelectron spectroscopy (XPS) in the depth direction of the protective layer from the surface of the protective layer opposite to the inorganic layer up to one-third of the total thickness thereof, is in the range of 1.30 to 2.30.

### [Substrate film]

The substrate film to use for the present invention is preferably a substrate film containing an olefin based resin. The olefin based resin to use is not particularly limited, and examples thereof include polyolefin resins such as polyethylene, polystyrene, polypropylene, polyisobutylene, polybutene, and polymethylpentene; cyclic polyolefin resins; copolymerized or modified polyolefin resins such as ethylene-vinyl acetate copolymer resins and polyvinyl alcohol resins; and mixed resins thereof. Among these, polypropylene is preferred from the viewpoint of physical properties such as mechanical properties and heat resistance, as well as ease of recycling. It is preferable that recycled materials account for 3 to 55 mass% of the total amount of these resins. Here, the recycled materials may be either those recycled through mechanical recycling or those recycled through chemical recycling, and there are no particular limitations on such features thereof. Furthermore, they may be mixed resins formed by combining resins listed above as components of a substrate film, and raw materials derived from chemical fuels containing components derived from biomass (plant-derived).

The substrate film may be either an unstretched film or a stretched (uniaxial or biaxial) film, but the use of a biaxially stretched film is preferable, and the use of a biaxially stretched polypropylene film is particularly preferable, from the viewpoint of thermal dimensional stability.

There are no particular limitations on the thickness of the substrate film, but it is preferably 1 µm or more and 100 µm or less, more preferably 5 µm or more and 50 µm or less, and still more preferably 10 µm or more and 30 µm or less.

If necessary, the substrate film may undergo treatments such as corona treatment, ozone treatment, plasma treatment, glow discharge treatment, or the like in order to improve adhesiveness to the inorganic layer.

### [Inorganic layer]

The inorganic layer to use for the present invention is a layer containing a simple inorganic substance or an inorganic compound and it may be a mixture of a simple inorganic substance and an inorganic compound. For example, the inorganic layer may include aluminum, magnesium, titanium, tin, indium, silicon, zinc, or oxides thereof, which may be contained alone or as a mixture of two or more thereof. The inorganic layer more preferably includes a metal oxide or a metal nitride. If the inorganic layer contains a metal oxide or a metal nitride, it is preferable because it ensures durability against heat applied during processing by boiling or retorting and also because, when the laminated body according to the present invention is designed for use as a packaging for acidic contents, it ensures increased acid resistance to the acidic contents. Examples of useful metal oxides include aluminum oxide, magnesium oxide, titanium oxide, tin oxide, indium oxide alloys, silicon oxide, and silicon oxynitride, while examples of useful metal nitrides include aluminum nitride, titanium nitride, and silicon nitride, which may be used alone or as a mixture of two or more thereof. In particular, it is more preferable that the inorganic layer to use for the present invention contain aluminum (Al) and/or silicon (Si), because durability against heat applied during the above-described boil or retort processing and acid resistance to acidic contents can be improved more easily. Here, the elemental composition may vary in the thickness direction in the inorganic layer. If the elemental composition in the inorganic layer varies in the thickness direction, it can serve to improve the adhesiveness between the inorganic layer and the protective layer and furthermore, when incorporated in a laminated body, it works to prevent peeling between the inorganic layer and the protective layer. Of the substances mentioned above, it is preferable to adopt oxygen, aluminum, or silicon as elemental components of the inorganic layer from the viewpoint of manufacturing cost, gas barrier properties, heat resistance to the heat applied during the processing by boiling or retorting mentioned above, and acid resistance to acidic contents. It is more preferable to use aluminum oxide because it is composed of oxygen and aluminum. It should be noted here that the aluminum oxide present in the inorganic layer used for the present invention may not necessarily be fully oxidized aluminum oxide (Al₂O₃). As described above, it may also be a suboxide-state aluminum oxide material in which the elemental composition varies in the thickness direction in the inorganic layer, or a mixed aluminum oxide material containing suboxide-state aluminum oxide.

There are no particular limitations on the method to use for forming the inorganic layer, and it can be formed by a generally known method such as vapor deposition, sputtering, ion plating, plasma chemical vapor deposition, or the like. However, from the viewpoint of productivity, the use of the vacuum vapor deposition technique is preferable.

Furthermore, as an example of a method for forming an inorganic layer in which the elemental composition varies in the thickness direction, a process for forming an inorganic layer in which the composition varies continuously from an aluminum metal layer to an aluminum oxide layer will be described below. In this case, as the method for forming an inorganic layer, it is preferable to adopt a process in which the composition varies continuously from an aluminum metal layer to an aluminum oxide layer in a vacuum chamber. Formation of an inorganic layer can be performed by a generally known method such as vapor deposition, sputtering, ion plating, and plasma chemical vapor deposition. However, from the viewpoint of productivity, the use of the vapor deposition technique is preferable.

The production process is described in more detail below. In a vacuum chamber, a roll of substrate film is set and the substrate film is unwound, followed by heating it to evaporate aluminum. For the heating to evaporate aluminum, useful methods include resistance heating, high frequency heating, and electron beam heating. The aluminum molecules evaporated by heating attach to the substrate film to form an aluminum metal layer. After the formation of an aluminum metal layer, oxygen gas is introduced during the latter part of the deposition step. Since the oxygen gas introduced above diffuses in the direction from the take-up side toward the unwinding side of the substrate film, the reaction involving oxygen to convert the aluminum metal layer to an aluminum oxide layer proceeds continuously, thereby producing an inorganic layer having a gradient structure in which the composition varies continuously in the film thickness direction.

Here, the gradient structure of the inorganic layer described above can be controlled by adjusting or changing the feed rate and introduction speed of the oxygen gas introduced as described above, the position, shape, and number of the oxygen inlets such as oxygen nozzles, the conveying speed of the substrate film, etc. However, the present invention is not particularly limited to these.

A good method for measuring the film thickness of the gradient structure is to perform compositional analysis in the depth direction by X-ray photoelectron spectroscopy (XPS) and determine the structure of the inorganic compound film on the basis of depth profiles. Here, for a metal element, profiles of oxide components and metal components are developed separately. After starting ion etching from the surface layer on the protective layer side, data collection is continued until the substrate is reached, and the resulting depth profile of each element is examined to determine the presence or absence of a continuous increase or decrease in its amount. Regarding the presence or absence of a continuous increase or decrease, the existence of a continuous increase or decrease is judged according to whether the length of the increase or decrease extends over 2 nm or more.

Next, the total thickness of the inorganic layer is measured by the method described later. The film thickness of the gradient structure is calculated from the total thickness of the inorganic layer and the size of the region that represents the inorganic layer in the depth profile.

For the present invention, the thickness of the inorganic layer is preferably 5 nm or more and 150 nm or less, and it is more preferably 7 nm or more and 100 nm or less because it facilitates the enhancement of gas barrier properties and easy avoidance of cohesive failure in the inorganic layer, as described later, which ensures increased adhesiveness. If the thickness is 5 nm or less, it may lead to inferior gas barrier properties, whereas if it is 150 nm or more, cohesive force in the inorganic layer may decrease, resulting in cohesive failure in the inorganic layer to cause the inorganic layer to crack or peel off in some cases.

### [Protective layer]

The protective layer to use for the present invention contains a water soluble resin and/or a silicon alkoxide. The average of the composition ratio (Si/C) of the silicon element (Si) to the carbon element (C), as measured by X-ray photoelectron spectroscopy (XPS) in the depth direction of the protective layer, starting from the surface of the protective layer opposite to the inorganic layer up to one-third of the total thickness thereof, is in the range of 1.30 to 2.30. It is presumed that if the protective layer is configured as described above, the protective layer can be dense even when formed on an olefin based substrate film that is somewhat inferior in heat resistance or mechanical properties. As a result, good gas barrier properties and high adhesiveness can be realized even after boiling or retort treatment intended for severe usage environments.

In the protective layer used for the present invention, the average of the composition ratio (Si/C) of the silicon element (Si) to the carbon element (C), as measured by X-ray photoelectron spectroscopy (XPS) in the depth direction of the protective layer, starting from the surface of the protective layer opposite to the inorganic layer up to one-third of the total thickness thereof, is in the range of 1.30 to 2.30. It should be noted that the expression "the protective layer contains the silicon element (Si) and the carbon element (C)" means that the content of each of these elements is 5.0 atm% or more among all atoms constituting the protective layer which account for 100.0 atm%, when observed by XPS (X-ray photoelectron spectroscopy; also referred to as ESCA (electron spectroscopy for chemical analysis)) under the conditions described in the Examples. Thus, when if the content of either the silicon element (Si) or the carbon element (C) is less than 5.0 atm% among all atoms constituting the protective layer which account for 100.0 atm%, such a layer is regarded as different from the protective layer defined for the present invention. Detailed evaluation conditions for the XPS analysis conducted for the present invention are described in the Examples.

The use of this method makes it possible to determine the composition ratio in the depth direction from the surface of the protective layer opposite to the inorganic layer. However, since the region extending to a depth of 0.4 nm from the surface of the protective layer contains information on surface contamination, the composition of the protective layer is calculated starting from a position deeper than 0.4 nm from the surface layer, and the average composition ratio (Si/C) in the depth direction down to the inorganic layer is determined. At this time, the thickness of the protective layer is first measured by the method described later. The depth corresponding to the distance from the protective layer surface to the interface with the inorganic layer, which is determined based in the measurement of the composition ratio in the depth direction analyzed by X-ray photoelectron spectroscopy (XPS), is defined as the thickness of the protective layer. The composition ratio is measured at different points aligned in the thickness direction in the range extending over one-third of the protective layer thickness, and the average of the measurements is adopted as the average composition ratio (Si/C) for the present invention. The average composition ratio (Si/C) in the protective layer used for the present invention is 1.30 to 2.30. It is preferably 1.50 to 2.00, and more preferably 1.70 to 1.90, and it is presumed that in this case, the protective layer can be denser even when formed on an olefin based substrate film that is somewhat inferior in heat resistance or mechanical properties. As a result, gas permeation paths for gases such as water vapor and oxygen are blocked, and good gas barrier properties and high adhesiveness can be realized even after boiling or retort treatment intended for severe usage environments. If the average composition ratio (Si/C) is less than 1.30, it is presumed that the denseness of the protective layer is insufficient. As a result, gas barrier properties are likely to deteriorate and, when used to produce a composite laminated body or a packaging as described later, the gas barrier properties will be insufficient after boiling or retort treatment intended for severe usage environments. In contrast, if the average composition ratio (Si/C) is more than 2.30, it is presumed that the protective layer becomes excessively dense and hard, thereby leading to an increased risk of cracks and fractures occurring in the protective layer or the inorganic layer. As a result, similarly to the case where the average composition ratio (Si/C) is less than 1.30, the gas barrier properties become insufficient.

For the present invention, it is preferable for the protective layer to contain a water soluble resin. Examples of such a water soluble resin include polyvinyl alcohol, ethylene-vinyl alcohol copolymers, and modified polyvinyl alcohol, which may be used alone or as a mixture of two or more thereof. In particular, vinyl alcohol based polymers (including modified polyvinyl alcohols) are preferred. Vinyl alcohol based polymers (including modified polyvinyl alcohols) are generally produced by saponifying polyvinyl acetate, and they may be either in a partially saponified form, which is produced by saponifying only part of the acetyl groups, or in the fully saponified form. A higher degree of saponification is more preferable. The degree of saponification is preferably 90% or more, and more preferably 95% or more. When the protective layer is low in the degree of saponification and contains many acetic acid groups that can cause significant steric hindrance, it may undergo an increase in the free volume in some cases. The degree of polymerization of the vinyl alcohol based resins is preferably 1,000 or more and 3,000 or less, and more preferably 1,000 or more and 2,000 or less. If the degree of polymerization is too low, the polymer may become difficult to immobilize, making it less likely in some cases that adhesiveness and gas barrier properties will develop sufficiently.

It is particularly preferable for the water soluble resin to be a vinyl based polymer having a carbonyl group in a cyclic structure. If such a vinyl based polymer having a carbonyl group in a cyclic structure is contained as the water soluble resin component in the protective layer, it will serve to form a dense film as a result of hydrophobization by the cyclic structure and interactions caused by carbonyl groups around polymer molecules. This increases the water resistance and allows the protective layer to have a dense structure with low hydrophilicity, thus reducing the interactions with gas molecules of oxygen and water vapor and blocking their permeation pathways. It is considered that desirable adhesiveness and good gas barrier properties are developed in this way. Here, for the present invention, it is preferable that the vinyl based polymer having a carbonyl group in a cyclic structure account for 20 to 100 mass% of the total mass, which accounts for 100 mass%, of the water soluble resin present in the protective layer. If its content is less than 20 mass%, it may fail in improving the gas barrier properties sufficiently. It is most preferable that the vinyl based polymer having a carbonyl group in a cyclic structure account for 100 mass%, which means that all water soluble resin molecules are in that form.

There are no particular limitations on the cyclic structure as long as it has three or more members (for example, three- to six-membered rings). The cyclic structure may also be a heterocyclic structure that contains non-carbon heteroatoms such as nitrogen, oxygen, sulfur, and phosphorus. Furthermore, the site of the carbonyl group in such a cyclic structure may be located on any one of the main chain, side chain, and crosslinked chain in the vinyl based polymer. Specific examples of the vinyl based polymer having a carbonyl group in a cyclic structure include lactone structures, which are cyclic esters, and lactam structures, which are cyclic amides. These may be present alone or as a combination of two or more thereof, and there are no particular limitations on them, though the use of a lactone structure is preferable. If a vinyl based polymer having a lactone structure is used as the water soluble polymer, it serves to maintain gas barrier properties easily because it tends to be stable against acid catalysts to be used for the hydrolysis of silicon alkoxide, which will be described later. Examples of such a vinyl based polymer having a lactone structure include α-acetolactone, β-propiolactone, γ-butyrolactone, and δ-valerolactone.

For the present invention, it is preferable for the protective layer to contain a silicon alkoxide. Examples of the silicon alkoxide include those compounds that are represented as Si(OR)₄. R in the silicon alkoxide is preferably a lower alkyl group, and examples thereof include the methyl group, ethyl group, n-propyl group, and n-butyl group. More specifically, examples of the silicon alkoxide include tetramethoxysilane, tetraethoxysilane, tetrapropoxysilane, and tetrabutoxysilane, which may be used alone or as a mixture of two or more thereof. In particular, it is preferable for the present invention that the protective layer further contain a linear polysiloxane. It is presumed that the inclusion of a linear polysiloxane in the protective layer causes dense intertwining of molecular chains, leading to the formation and immobilization of a network of molecular chains in the protective layer. This acts to restrict the movement of the molecular chains of the components present in the protective layer to limit the pathways through which gas molecules such as oxygen and water vapor can permeate. In particular, a linear polysiloxane tends to have few pores among its molecular chains, allowing the chains to exist at a high density. It is presumed therefore that as a network of molecular chains is formed and immobilized in the protective layer, the movement of the molecular chains of the components present in the protective layer can be suppressed, and accordingly, the protective layer will have a dense structure. As a result, gas barrier properties can be enhanced to form a protective layer having a structure that is dense enough to prevent the expansion of the permeation pathways for gas molecules of oxygen and water vapor from being caused by changes in environmental factors such as temperature. Accordingly, even in a protective layer formed on an olefin based substrate film that is somewhat inferior in heat resistance or mechanical properties, this works to develop good gas barrier properties even after high temperature processing in hot water such as boiling and retorting. Linear polysiloxanes are represented by the chemical formula (1) given below, where n in the chemical formula (1) is an integer of 2 or greater. In the chemical formula (1), R may be, for example, a lower alkyl group such as the methyl group, ethyl group, n-propyl group, and n-butyl group, or a branched alkyl group such as the isopropyl group and t-butyl group. For the present invention, linear polysiloxanes having longer linear structures can work more easily to form and immobilize a network in the protective layer, and accordingly, n is preferably 5 or greater, and more preferably 10 or greater. There are no particular limitations on the upper limit of n. However, components having n of 30 or greater may form a cyclic network structure, and the protective layer may conversely become sparse. Therefore, n is preferably adjusted appropriately.

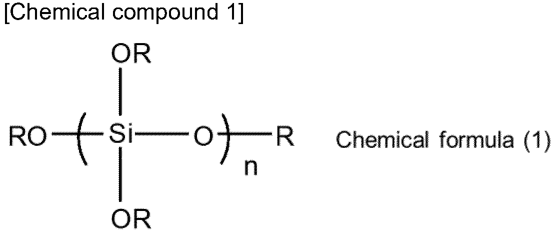

A linear polysiloxane can be produced from a silicon alkoxide. For example, such a silicon alkoxide may be hydrolyzed to obtain a linear polysiloxane. A silicon alkoxide can be hydrolyzed in the presence of Si(OR)₄, water, a catalyst, or an organic solvent. The amount of water to be used for hydrolysis is preferably 0.8 equivalent or more and 5 equivalents or less, and more preferably 1.0 equivalent or more and 4 equivalents or less, relative to the alkoxy group of Si(OR)₄. If the amount of water is less than 0.8 equivalent, hydrolysis may not proceed sufficiently and the intended linear polysiloxane may not be obtained in some cases. If more than 5 equivalents of water is used, the reactions of the silicon alkoxide that will be described later may proceed randomly in some cases to form large amounts of nonlinear polysiloxane molecules, thus failing in obtaining a linear polysiloxane.

It is preferable that the catalyst to use for the hydrolysis be an acid catalyst. Examples of good acid catalysts include, but not limited to, hydrochloric acid, sulfuric acid, nitric acid, phosphoric acid, acetic acid, and tartaric acid. Normally, both acid catalysts and base catalysts can be useful to promote the hydrolysis and polycondensation of silicon alkoxides. However, when an acid catalyst is used, the monomers in the system tend to be hydrolyzed in a more uniform manner, making it easier to produce a linear structure. On the other hand, when a base catalyst is used, the reaction mechanism that occurs tends to work to allow hydrolysis and polycondensation reactions of alkoxides bonded to the same molecule to proceed more easily. Accordingly, reactions tend to progress in a random manner and yield reaction products having larger numbers of gaps. The amount of the catalyst to use is preferably 0.1 mol% or more and 0.5 mol% or less relative to the total amount by mole of the silicon alkoxide.

Examples of useful organic solvents for the hydrolysis include water and alcohols that can mix with silicon alkoxides such as methyl alcohol, ethyl alcohol, n-propyl alcohol, isopropyl alcohol, and n-butyl alcohol.

The hydrolysis is preferably performed at a temperature of 20°C or more and 45°C or less. If the reaction is attempted at less than 20°C, the reactivity may be too low in some cases, possibly making it difficult for Si(OR)₄ to be hydrolyzed smoothly. On the other hand, if the reaction is carried out at a temperature of more than 45°C, the hydrolysis and polycondensation reactions may proceed too rapidly in some cases, possibly causing gelation or resulting in random, less dense polysiloxane molecules that are not linear.

For the present invention, it is preferable for the protective layer to further contain a silicon alkoxide having a ureido group. It is presumed that the use of a silicon alkoxide having a ureido group acts, during the composite laminated body formation step described later, not only to promote the interaction between functional groups present in the protective layer and those contained in other adjacent layers (printing ink layer, adhesive layer, resin layer, etc.), but also to enhance their adhesiveness as it is incorporated into the aforementioned network of molecular chains of the water soluble resin and linear polysiloxane to allow the components to remain in place without being removed even under a force working to cause delamination. Accordingly, even in a protective layer formed on an olefin based substrate film that is somewhat inferior in heat resistance or mechanical properties, this works to develop better gas barrier properties even after high temperature processing in hot water such as boiling and retorting. For the present invention, any silicon alkoxide having a ureido group may be used as long as it has a ureido group in its structure. The silicon alkoxide may be mono- to tri-functional one having one to three ureido groups. The ureido group may be connected to a silicon atom in the silicon alkoxide via a straight chain, such as a methyl group, ethyl group, and propyl group, or a branched alkyl chain. Moreover, in order to ensure required properties, productivity, etc., one of different silicon alkoxides may be used singly or two or more thereof may be used in combination. Examples of such a silicon alkoxide having a ureido group include KBM-585 and KBM-585A, manufactured by Shin-Etsu Chemical Co., Ltd., A-1160, manufactured by Momentive Performance Materials Japan LLC, and DOWSIL (registered trademark) Z-6119 Silan, DOWSIL Z-6120 Silan, and DOWSIL Z-6675 Silan, manufactured by Dow Toray Co., Ltd., which are available as commercial products from various manufacturers.

For the present invention, the protective layer to use may further contain another silicon alkoxide having a functional group such as a silane coupling agent in addition to a water soluble resin, a linear polysiloxane, and a silicon alkoxide having a ureido group, and there are no particular limitations thereon as long as it does not inhibit the preferred effects of the present invention.

### [Component composition of protective layer]

For the present invention, the silicon alkoxide having a ureido group preferably accounts for a solid content of 2.5 mass% or more of the total solid content in the protective layer. If the solid content accounted for by the silicon alkoxide having a ureido group is 2.5 mass% or more, bonds and entanglements are more likely to be formed in the network of molecular chains of the water soluble resin and the linear polysiloxane, making it easier for the components to stay in place without being removed during peeling and thereby ensuring the development of stronger adhesiveness. The solid content accounted for by the silicon alkoxide having a ureido group is preferably 5.0 mass% or more, and more preferably 8.0 mass% or more. Here, there are no particular limitations on the upper limit of the solid content accounted for by the silicon alkoxide having a ureido group, but if it is more than 50 mass%, the amounts of the water soluble polymer and the linear polysiloxane in the protective layer may be too small in some cases, causing the molecular chain network to become less dense and possibly leading to deteriorated gas barrier properties. Therefore, it is preferably adjusted to 50% or less. It should be noted that the solid content accounted for by the silicon alkoxide having a ureido group can be determined by the method described below.

For the present invention, it is preferable that the total content of all water soluble resin components in the protective layer is 20 to 80 mass% relative to 100 mass% of the protective layer. If the content of the water soluble resin is 20 to 80 mass%, the protective layer tends to have a dense structure, thereby facilitating the development of good gas barrier properties in addition to adhesiveness. If the content of the water soluble resin is less than 20 mass%, the protective layer tends to harden easily, possibly leading to cracks to cause deterioration in the gas barrier properties. If the content of the water soluble resin is more than 80 mass%, it may become impossible to immobilize the water soluble resin, possibly leading to deterioration in the gas barrier properties. It is more preferable that the content of the water soluble resin be 25 to 60 mass%, still more preferably 30 to 50 mass%.

For the present invention, the total content of all linear polysiloxane components in the protective layer may also be 20 to 80 mass% relative to 100 mass% of the protective layer. However, as described above, it may further contain a silicon alkoxide that has or does not have a ureido group (or a hydrolysate of such a silicon alkoxide). Thus, on the basis of conversion of the linear polysiloxane and silicon alkoxide into SiO₂, it is preferable that the total content of the inorganic components in the protective layer (hereinafter, an inorganic component in the protective layer will occasionally be referred to as a protective layer inorganic component) be 20 to 80 mass% relative to 100 mass% of the protective layer, and it is more preferably 30 to 65 mass%. It should be noted that the content of the water soluble resin in the protective layer and that of the protective layer inorganic components can be measured by the method described later.

For the present invention, the mixing ratio of the linear polysiloxane and the silicon alkoxide present in the protective layer may be adjusted appropriately. For the mixing ratio, the masses of the linear polysiloxane and the silicon alkoxide are converted into masses of SiO₂, and on the bases of the converted masses, the mixing ratio between the linear polysiloxane and the silicon alkoxide is preferably in the range of 15/85 to 90/10, more preferably in the range of 40/60 to 85/15, and still more preferably in the range of 40/60 to 65/35. If this ratio is more than 90/10, the interaction among molecules of the linear polysiloxanes becomes too strong and it becomes impossible in some cases to immobilize the water soluble resin and the silicon alkoxides having a ureido group, which may lead to deterioration in the adhesiveness and gas barrier properties. On the other hand, if it is less than 15/85, the number of Si-OH bonds derived from the silicon alkoxides increases to cause an increase in hydrophilicity, reducing the gas barrier properties in some cases. The mixing ratio between the linear polysiloxane and the silicon alkoxide in the protective layer may be measured by the method described later.

Here, if the linear polysiloxane in use is one produced from an oligomeric raw material containing a plurality of Si(OR)₄ groups bonded thereto, it serves to facilitate the adjustment of the mixing ratio between the linear polysiloxane and the silicon alkoxide. Examples of such an oligomeric raw material containing a plurality of Si(OR)₄ groups bonded thereto include linear oligomers in the form of multimers containing multiple alkyl silicates such as methyl silicate as represented by the chemical formula (1) in which R is a methyl group, and an ethyl silicate in which R is an ethyl group.

For the present invention, a protective layer can be formed by allowing the linear polysiloxane and the silicon alkoxide to be incorporated in the intended protective layer to undergo a polycondensation reaction by heating. As the polycondensation reaction proceeds, the numbers of alkoxy groups and/or hydroxy groups present in the linear polysiloxane and silicon alkoxides decrease, leading to a protective layer having a dense and tough structure. Moreover, the polycondensation reaction causes an increase in the molecular weights of the linear polysiloxane and the silicon alkoxides, thereby enhancing the ability to immobilize the water soluble resin and each silicon alkoxide having a ureido group themselves. Accordingly, in the case where a protective layer is formed by advancing the polycondensation reaction through heating, a higher temperature is more favorable because a protective layer having better gas barrier properties and higher adhesiveness can be produced by promoting the reaction by applying heat. However, if the temperature is more than 180°C, the olefin based substrate film, which is somewhat inferior in heat resistance or mechanical properties, may shrink due to heat and the inorganic layer may suffer strain or cracking, leading to deterioration in gas barrier properties in some cases.

A protective layer can be laid by coating the inorganic layer with a coating liquid that contains components for forming the protective layer (hereafter, occasionally referred to as protective layer coating liquid), followed by drying. Accordingly, the drying temperature for the coating film, that is, the temperature at which the aforementioned polycondensation reaction is advanced, is preferably in the range of 100°C or more and 200°C or less, more preferably 120°C or more and 180°C or less, and still more preferably 150°C or more and 180°C or less. If the temperature is less than 100°C, the water contained as the solvent that will be described later may not be evaporated sufficiently, possibly leading to failure in curing the layer properly.

The protective layer coating liquid can be prepared by mixing a solution prepared by dissolving a water soluble resin in water or in a water/alcohol mixed solvent with a solution containing a linear polysiloxane and a silicon alkoxide having or not having a ureido group. Examples of a useful alcohol to use as a solvent include methyl alcohol, ethyl alcohol, n-propyl alcohol, isopropyl alcohol, and n-butyl alcohol.

There are no particular limitations on the method to use for spreading the protective layer coating liquid over the inorganic layer, and generally known ones can be adopted including the direct gravure method, reverse gravure method, micro gravure method, rod coating method, bar coating method, die coating method, and spray coating method.

For the present invention, the protective layer may contain a leveling agent, crosslinking agent, curing agent, adhesion promoter, stabilizer, ultraviolet absorber, antistatic agent, and the like, as long as they do not impair the gas barrier properties or adhesiveness. Good examples of the crosslinking agent include metal alkoxides of aluminum, titanium, zirconium, or the like, and complexes thereof.

For the present invention, the thickness of the protective layer is preferably 10 nm or more and 1,000 nm or less, more preferably 100 nm or more and 600 nm or less, and still more preferably 250 nm or more and 500 nm or less. If the thickness is less than 10 nm, pinholes or cracks in the inorganic layer may not be sufficiently filled, and adequate gas barrier properties may not be exhibited. On the other hand, if the thickness is more than 1,000 nm, cracks may occur in some cases due to the large thickness.

As described above, a condensation reaction proceeds due to heating in the protective layer, and accordingly the gas barrier properties and adhesiveness are improved. Therefore, in order to enhance the gas barrier properties and adhesiveness, it is also preferable to subject the laminated body to further heat treatment after the formation of the protective layer. The heat treatment step is preferably performed at a temperature of 30°C or more and 100°C or less and more preferably 40°C or more and 80°C or less. The heat treatment time is preferably 1 day or more and 14 days or less and more preferably 3 days or more and 7 days or less. If the heat treatment temperature is less than 30°C, the thermal energy required to accelerate the reaction may not be maintained sufficiently, resulting in an insufficient effect in some cases, whereas if it is more than 100°C, it may lead to curling of the olefin based substrate film, bleeding-out of oligomers, additives, etc., or an increase in cost for equipment, manufacturing process, etc.

### [Analysis of laminated body (described here, and described later again)]

For the present invention, the presence of a linear polysiloxane in the protective layer can be confirmed by laser Raman spectroscopy. In laser Raman spectroscopic observations of bonding states of linear polysiloxanes and metal alkoxides (including hydrolysates of metal alkoxides), Raman bands attributed to linear polysiloxanes, random network structures that contain rings of five or more members along with branching, and four-membered cyclic structures all appear in the range of 400 to 500 cm⁻¹. These Raman bands overlap each other, with four-membered ring structures observed at 495 cm⁻¹, linear polysiloxanes observed at 488 cm⁻¹, and random network structures, which are not distinct regular structures, appearing as a broad band around and below 450 cm⁻¹, and their peaks can be separated by means of fitting based on Gaussian function approximation.

Described below is a method to determine the contents of the water soluble resins and the inorganic components (linear polysiloxanes and silicon alkoxides (including hydrolysates of silicon alkoxides)) that are present in a protective layer. The amounts of linear polysiloxanes and silicon alkoxides (including hydrolysates of silicon alkoxides), which are inorganic components, can be represented in terms of the amount of silicon as described above, and the amount of silicon can be determined by X-ray fluorescence analysis. First, five types of standard samples having known silicon contents that differ from each other are prepared and each sample is subjected to X-ray fluorescence analysis separately. For X-ray fluorescence analysis, X-rays are applied to a sample and element-specific fluorescent X-rays generated are detected. As the amount of generated X-rays is proportional to the amount of the element present in the sample under measurement, the measured X-ray intensity S (in cps/µA) of silicon is in a proportional relationship to the amount of silicon. Here, the thickness of each standard sample is calculated by the same procedure as used to calculate the average thickness T, which will be described later, and the X-ray intensity S measured by X-ray fluorescence analysis is divided by the thickness of the standard sample to determine the X-ray intensity S per unit thickness. A calibration curve is then created by plotting the known silicon contents and the X-ray intensities S per unit thickness. Next, for the laminated body according to the present invention, the X-ray intensity S per unit thickness is determined in the same manner from X-ray fluorescence analysis and the average thickness T, and the value thus obtained is used in combination with the calibration curve to calculate the silicon content. From this silicon content, the total number of moles of silicon atoms contained in the linear polysiloxane and silicon alkoxide is determined and converted into the mass of SiO₂ to show the total mass content S in the protective layer inorganic components, followed by determining the contents of the water soluble resin and inorganic components.

Among the inorganic components in the protective layer, the mixing ratio between the linear polysiloxane and the silicon alkoxide can be measured based on observation by the aforementioned laser Raman spectroscopy technique. Specifically, the ratio of A2/A1, where A1 is the area of the Raman band attributed to random network structures while A2 is the area of the Raman band attributed to the linear polysiloxane, represents the mixing ratio of the linear polysiloxane to silicon alkoxide (mass ratio converted in terms of SiO₂).

Then, after determining the mixing ratio of the water soluble resin and the linear polysiloxane/silicon alkoxide (mass ratio converted in terms of SiO₂) by the above method, five types of standard samples are prepared. Among the various solid components corresponding to the silicon alkoxides included in the composition identified above, the solid contents of the silicon alkoxides each having a ureido group is known and different from each other in the standard samples. Each sample was examined by X-ray fluorescence analysis in the same manner as described above while detecting the generation of X-rays. Here, the X-ray intensity S (in cps/µA) of silicon differs depending on the difference in the solid content accounted for by each silicon alkoxide having an ureido group. In the same way as described above, the thickness of each standard sample is calculated by the same procedure as used for the average thickness T, which will be described later, and a calibration curve is created by plotting the known solid contents of silicon alkoxides having ureido groups and the X-ray intensity S per unit thickness. Subsequently, for the laminated body according to the present invention, the X-ray intensity S per unit thickness is determined in the same manner from X-ray fluorescence analysis and the average thickness T, and the value thus obtained is used in combination with the calibration curve to calculate the converted solid content ratio of the silicon alkoxides having ureido groups.

### [Anchor layer]

It is preferable that the laminated body according to the present invention have an anchor layer located between the olefin based substrate film and the inorganic layer. If an anchor layer is present as an undercoat layer on the olefin based substrate film, it serves to improve the adhesiveness between the olefin based substrate film and the inorganic layer and facilitate the development of adhesiveness in composite laminated bodies and packagings as described later even after boil or retort processing intended for severe usage environments.

The anchor layer is not particularly limited as long as it can work to improve the adhesiveness between the olefin based substrate film and the inorganic layer, and preferred materials include organic polymers and inorganic polymers.

Such inorganic polymers may be inorganic oxides, and examples thereof include polymers that can be produced by hydrolysis and polymerization reactions of silicon oxides including tetraalkoxysilanes such as tetramethoxysilane, tetraethoxysilane, tetra-n-propoxysilane, tetra-i-propoxysilane, and tetra-n-butoxysilane; trialkoxysilanes such as methyltrimethoxysilane, methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, n-butyltrimethoxysilane, n-butyltriethoxysilane, n-pentyltrimethoxysilane, n-pentyltriethoxysilane, n-hexyltrimethoxysilane, n-heptyltrimethoxysilane, n-octyltrimethoxysilane, vinyltrimethoxysilane, vinyltriethoxysilane, cyclohexyltrimethoxysilane, cyclohexyltriethoxysilane, phenyltrimethoxysilane, phenyltriethoxysilane, 3-chloropropyltrimethoxysilane, 3-chloropropyltriethoxysilane, 3,3,3-trifluoropropyltrimethoxysilane, 3,3,3-trifluoropropyltriethoxysilane, 2-hydroxyethyltrimethoxysilane, 2-hydroxyethyltriethoxysilane, 2-hydroxypropyltrimethoxysilane, 2-hydroxypropyltriethoxysilane, 3-hydroxypropyltrimethoxysilane, 3-hydroxypropyltriethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-(meth)acryloxypropyltrimethoxysilane, 3-(meth)acryloxypropyltriethoxysilane, vinyltrimethoxysilane, vinyltriethoxysilane, allyltrimethoxysilane, and vinyltriacetoxysilane; and organoalkoxysilanes such as methyltriacetyloxysilane and methyltriphenoxysilane.

Useful organic polymers include thermoplastic resins, thermosetting resins, and light curing resins. More specifically, they may be organic polymer compounds including polyester based resin, polycarbonate resin, (meth)acrylic resin, polyurethane based resin, polyether based resin, polyepoxy based resin, polyamide based resin, ABS resin, polyimide based resin, olefin based resin (such as polyethylene and polypropylene), polystyrene resin, polyvinyl acetate resin, melamine based resin, phenolic resin, resin containing chlorine (Cl) (such as polyvinyl chloride and polyvinylidene chloride), and cellulose based resin, of which at least one is selected from the viewpoint of required characteristics and productivity, or a plurality thereof may be mixed. In addition, these organic polymers may contain a curing agent. Examples of the curing agent include aliphatic, aromatic, and alicyclic isocyanate based curing agents. Preferred examples thereof include monomers such as aromatic tolylene diisocyanate (TDI) and diphenylmethane diisocyanate (MDI), aliphatic xylene diisocyanate (XDI) and hexamethylene diisocyanate (HMDI), and isophorone diisocyanate (IPDI), as well as polymers and derivatives thereof. These may be used alone or as mixtures thereof.

### [Composite laminated body]

The composite laminated body according to the present invention is a composite laminated body including a second olefin layer containing an olefin based resin, the second olefin layer being laid on either surface of the laminated body with a resin layer interposed in between, and it may be a composite laminated body including a third olefin layer laid on at least either the laminated body side surface or the second olefin layer side surface with a resin layer interposed in between. Accordingly, the face to be laid with a second olefin layer may be either the protective layer side surface of the laminated body or the other surface of the laminated body that is opposite to the protective layer.

To lay a resin layer when forming a second olefin layer or a third olefin layer on the laminated body according to the present invention, there are no particular limitations on the method to use therefor, and good examples includes a method in which a molten resin is extruded onto either an appropriate surface of the laminated body or an appropriate surface of the second olefin layer or the third olefin layer to form a resin layer, followed by laminating the laminated body with the second olefin layer and then with the third olefin layer, and another method in which an adhesive is used to form a resin layer, followed by laminating the laminated body with the second olefin layer and then with the third olefin layer, with the adhesive layer interposed in between.

When the resin layer is formed by extrusion as in the former case, the resin layer to use is preferably an olefin based resin such as polyethylene and polypropylene, or a mixed resin thereof, because these resins are so low in melting point that thermal damage likely to be caused by the extruded molten resin will be minimized and also because a high recyclability will be ensured.

In the latter case where an adhesive is used to form a resin layer for lamination, examples of good adhesives include one-component or two-component curable vinyl type, (meth)acrylic type, polyamide type, polyester type, polyether type, polyurethane type, epoxy type, or rubber type solvent based, water based, or emulsion based adhesives. Commercially available products include two-component curable type polyether based adhesive products such as TM-570/CAT-RT37, manufactured by Toyo Ink Co., Ltd., LX500/KO55, manufactured by DIC Corporation, RU-77T/H-7, manufactured by Rock Paint Co., Ltd., A-620/A-6, manufactured by Mitsui Chemicals, Inc., A4210R/CA75, manufactured by Dainichiseika Color & Chemicals Mfg. Co., Ltd., and LA2760/LA5891, manufactured by Henkel. In addition, PASLIM VM001/VM108CP, manufactured by DIC Corporation, can also be useful for the purpose of achieving improved gas barrier properties.

To apply the adhesives listed above, good coating methods include, but not limited to, the direct gravure coating method, reverse roll coating method, kiss coating method, and fountain coating method. Regarding the coating rate, it is preferable that the resulting dried coat will have a weight of 0.1 g/m² or more and 10 g/m² or less, more preferably 1 g/m² or more and 5 g/m² or less.

The second olefin layer and the third olefin layer each contain an olefin based resin. Examples of such an olefin based resin include polyethylene based resins, polypropylene based resins, polyisobutylene based resins, polybutene based resins, polymethylpentene based resins, cyclic polypropylene based resins, cyclic polyolefin based resins, cyclic olefin copolymer resins, ethylene-vinyl acetate copolymer resins, polyvinyl alcohol resins, and other copolymerized or modified polyolefin resins, as well as copolymer resins or mixed resins containing these resins as principal components. For the present invention, in particular, the use of a resin film containing a heat sealable olefin based resin, such as polyethylene based resin or polypropylene based resin, is preferred when forming the undermentioned packaging, from the viewpoint of ease of production, mechanical properties, heat resistance, and other physical properties, as well as ease of recycling. Examples of useful ones include low density polyethylene (LDPE), medium density polyethylene (MDPE), high density polyethylene (HDPE), straight chain (linear) low density polyethylene (LLDPE), unstretched or stretched polypropylene (PP), ethylene-α-olefin copolymer polymerized with a metallocene catalyst, random or block copolymer of ethylene and polypropylene, ethylene-vinyl acetate copolymer (EVA), ethylene-acrylic acid copolymer (EAA), ethylene-ethyl acrylate copolymer (EEA), ethylene-methacrylic acid copolymer (EMAA), ethylene-methyl methacrylate copolymer (EMMA), and ethylene-maleic acid copolymer.

For the composite laminated body according to the present invention after heating at 120°C for 15 minutes, it is preferable that the thermal shrinkage rate of the second olefin layer and/or the third olefin layer be smaller than that of the laminated body. If the thermal shrinkage rate of the second olefin layer and/or the third olefin layer is smaller than that of the laminated body, it serves to facilitate the production of the packaging described later, reduction in curling and wrinkling likely to occur in the packaging, and the achievement of good physical properties such as gas barrier properties in the resulting packaging. Here, the measurement of the thermal shrinkage rate to be performed for the present invention is conducted as described in the Examples.

The composite laminated body according to the present invention may further include a printing ink in the form of a printing ink layer. The printing ink layer may be laminated on either one surface or both surfaces of the laminated body, namely the protective layer side and/or the side opposite to the protective layer. Furthermore, such a layer may be laminated on either or both of the second olefin layer surface and the third olefin layer surface. In general, a printing ink layer is formed for the purpose of displaying information about the content or imparting light shielding properties, decorative properties, aesthetic properties, and the like. Therefore, this printing ink layer consists mainly of a colorant and a resin. If necessary, it may also contain any desirable additive, and examples thereof include curing agent, lubricant, anti-blocking agent, leveling agent, defoaming agent, pigment dispersant, silane coupling agent, ultraviolet absorber, rust inhibitor, plasticizer, flame retardant, reinforcing agent, antistatic agent, and viscosity modifier. There are no particular limitations on the colorant to use and an appropriate one may be selected from inorganic pigments, organic pigments, dyes, and the like. Examples of the resin to use for such a printing ink layer include, but not limited to, castor oil, polyester resin, polyurethane resin, epoxy resin, (meth)acrylic resin, melamine resin, polystyrene resin, phenolic resin, polyvinyl chloride resin, polyvinyl acetate resin, polyamide resin, nitrocellulose, polymeric acrylate compounds, and mixtures thereof. Furthermore, to form a printing ink layer as described above, any appropriate method may be used and good examples include letterpress printing, gravure printing, offset printing, flexographic printing, and screen printing. There are commercially available printing inks that can be applied and examples thereof include LP Bio Series and Rio Alpha S Series, which are gravure ink products designed for backing-up printing, manufactured by Toyo Ink Co., Ltd.; Finart S Series and Finart BM Series, manufactured by DIC Corporation; BelleColor Series and BelleFlora Series, manufactured by Sakata INX Corporation; Lamic SR Series, Lamic BP Series, and NB300BP Series, manufactured by Dainichiseika Color & Chemicals Mfg. Co., Ltd.; and LG-NT Series, manufactured by Tokyo Ink Co., Ltd.

### [Packaging]

The packaging according to the present invention is a bag formed by using the laminated body or the composite laminated body according to the present invention. The use of the laminated body or the composite laminated body according to the present invention serves to provide a packaging that not only has high recyclability, but also exhibits good gas barrier properties and high adhesiveness, thereby ensuring safe storage of the contents without suffering from deterioration of gas barrier properties or defects such as delamination after being filled with contents. Thus, this serves to provide a packaging having good gas barrier properties and high adhesiveness to ensure high resistance to heat that it undergoes during boiling/retorting intended for severe usage environments or acids present in acidic contents in cases where it contains acidic contents.

The laminated body according to the present invention has good gas barrier properties and also has high recyclability, and composite laminated bodies and packagings that include it can be applied suitably to uses where such properties are required.

### EXAMPLES

The present invention will now be illustrated more specifically with reference to examples, though the invention should not be construed as being limited thereto.

### (1) Component analysis and structural identification of protective layer (water soluble resin, linear polysiloxane, silicon alkoxide having ureido group)

The protective layer was peeled off from a sample and dissolved in a solvent that is capable of dissolving it. Then, the resulting solution was filtered to separate particles from the filtrate. If necessary, the components present in the protective layer and in the resin layer were separated into single substances and purified by means of a generally known chromatographic technique such as silica gel column chromatography, gel permeation chromatography, and high performance liquid chromatography. Subsequently, DMSO-d₆ was added to each single substance and heated to 60°C to ensure dissolution, and the resulting solution was subjected to nuclear magnetic resonance spectroscopy for ¹H-NMR and ¹³C-NMR observation. Then, for each single substance, qualitative analysis was conducted by means of an appropriate combination of IR spectroscopy (infrared spectroscopy), gas chromatography-mass spectrometry (GC-MS), pyrolysis gas chromatography-mass spectrometry (pyrolysis GC-MS), matrix-assisted laser desorption/ionization mass spectrometry (MALDI-MS), time-of-flight mass spectrometry (TOF-MS), matrix-assisted laser desorption ionization-time of flight mass spectrometry (MALDI-TOF-MS), dynamic secondary ion mass spectrometry (dynamic SIMS), and time-of-flight secondary ion mass spectrometry (TOF-SIMS)), thereby identifying the components present in the sample and identifying their structures. Here, when combining these qualitative analysis methods, an effective combination of the smallest number thereof was identified and used preferentially.

### (2) Thickness of protective layer and thickness of inorganic layer

The thickness of the protective layer and the thickness of the inorganic layer were determined based on observation of their cross sections under a TEM (transmission electron microscope). First, a sample for cross-sectional observation was prepared by the FIB technique using a microsampling system (FB-2000A, manufactured by Hitachi, Ltd.) (specifically, according to the procedure described in "Kobunshi Hyomen Kakogaku", Satoru Iwamori, pp. 118-119). Next, using a transmission electron microscope (H-9000UHRII, manufactured by Hitachi, Ltd.), observation was performed at an accelerating voltage of 300 kV. The cross section recorded was observed at an observation magnification that was adjusted so that the thickness of the layer accounted for a proportion of 30% to 70% in the observed image. In the same manner as above, a total of five samples were examined and the five measurements taken from the samples were averaged and were converted into nanometers (nm). Thus, the thickness of the protective laye and the thickness of the inorganic layer were determined.

### (3) Measurement of content ratio between water soluble resin and inorganic components (linear polysiloxane, silicon alkoxide) in protective layer

Polyvinyl alcohol (hereinafter occasionally abbreviated as PVA, polymerization degree 1,700, saponification degree 98.5%) used as the water soluble resin and the hydrolysat of tetraalkoxysilane (hereinafter occasionally abbreviated as TEOS) used as the inorganic component were mixed in such a manner that the content ratio between the water soluble resin and the inorganic component (the mass of the inorganic component was converted in terms of SiO₂) was 80/20, 65/35, 50/50, 35/65, or 20/80. Films prepared in this way were adopted as standard samples having different content ratios.

Then, each standard sample was examined using a X-ray fluorescence analysis instrument (EDX-700, manufactured by Shimadzu Corporation) to measure the intensity of the characteristic X-ray Kα of silicon, and the X-ray intensity S (in cps/µA) was determined. The thickness of each standard sample was measured by the procedure described in the above section (2), and the X-ray intensity S per unit thickness was calculated, followed by drawing a calibration curve that shows the relationship between the content of the water soluble resin and that of the inorganic component (the content of the inorganic component was converted in terms of SiO₂).

Subsequently, for the laminated body according to the present invention, the X-ray intensity S per unit thickness was determined in the same manner from X-ray fluorescence observation and the average thickness T, and the value obtained was examined in combination with the calibration curve to determine the content of the water soluble resin and that of the inorganic component.

### (4) Analysis of bonding state of silicon (existence or absence of linear polysiloxane) (mixing ratio of linear polysiloxane to silicon alkoxide (ratio by mass in terms of SiO₂))

The protective layer of a laminated body was separated by cutting, and analyzed by Raman spectroscopy under the conditions specified below.
Measurement instrument: T6400, manufactured by Atago-Jobin Yvon
Measurement mode; microscopic Raman spectroscopy
Objective lens: x100
Beam diameter: 1 µm
Light source: Ar⁺ laser/ 514.5 nm
Laser power: 200 mW
Diffraction grating: single 600 gr/mm
Slit: 100 µm
Detector: CCD (1,024 × 256), manufactured by Jobin Yvon

Described below are the analysis conditions for the Raman spectrum to use for calculating the area A1 that represents the random network structure formed mainly of silicon alkoxide and the area A2 that represents a linear polysiloxane. The Raman spectrum obtained was analyzed using spectral analysis software GRAMS/Thermo Scientific. After performing baseline correction of the Raman spectrum by collinear approximation, curve fitting was conducted in the range of 600 to 250 cm⁻¹. The fitting was performed separately for the following three components: four-membered ring structure (peak wavenumber 495 cm⁻¹, half-width 35 cm⁻¹), linear polysiloxane (peak wavenumber 488 cm⁻¹, half-width 35 cm⁻¹), and random network structure consisting mainly of silicon alkoxide. The random network structure consisting mainly of silicon alkoxide gives a broad peak that reflects its continuous structure. Therefore, automatic fitting was conducted by means of Gaussian function approximation for separating the three components of the four-membered ring structure, linear polysiloxane, and the random network structure.

The bands were determined and the area enclosed by the baseline were calculated to see whether or not there existed a linear polysiloxane. In addition, the ratio of A2/A1 (the mixing ratio of linear polysiloxane to silicon alkoxide (ratio by mass in terms of SiO₂)), where A1 is the area attributed to the random network structure of silicon alkoxide and A2 is the area attributed to the linear polysiloxane, was calculated.

### (5) Ratio of solid content of silicon alkoxide having ureido group to total solid content in protective layer

The mixing ratios (ratios by mass in terms of SiO₂) of the water soluble resin and linear polysiloxane/all silicon alkoxides were determined according to the procedures described in the above sections (3) and (4). Subsequently, after identifying the solid components that correspond to silicon alkoxides contained in the composition, five types of standard samples that contained silicon alkoxide having an ureido group at different known solid content concentrations were prepared. Each sample was subjected to X-ray fluorescence analysis in the same manner as in the above section (3) to measure the amount of X-ray generated. In the same manner as in the above sections (2) and (3), a calibration curve was created by plotting the solid content of silicon alkoxide having an ureido group and the X-ray intensity S per unit thickness.

Then, for the laminated body according to the present invention, the X-ray intensity S per unit thickness was determined in the same manner as above from X-ray fluorescence analysis and the average thickness T, and the value thus obtained was examined in combination with the calibration curve to convert the measurement into the solid content of the silicon alkoxide having an ureido group. Thus, the solid content ratio of the solid content of the silicon alkoxide having an ureido group was determined.

### (6) Gas barrier properties (oxygen barrier properties: oxygen transmission rate, water vapor barrier properties: water vapor transmission rate)

A sample to be evaluated was prepared. Then, the oxygen transmission rate (occasionally abbreviated as OTR) was measured under the conditions of a temperature of 23°C and a humidity of 90%RH using an oxygen transmission rate measuring apparatus (OX-TRAN (registered trademark) 2/21, manufactured by Mocon) according to JIS K7126-2 (2006). Two test pieces were prepared and two measurements were taken from each of them. The average of the total of four measurements was adopted as their oxygen transmission rate. The water vapor transmission rate (occasionally abbreviated as WVTR) was measured under the conditions of a temperature of 40°C and a humidity of 90%RH using a water vapor transmission rate measuring apparatus (PERMATRAN (registered trademark) -W 3/31, manufactured by Mocon) according to JIS K7129-2 (2019). Two test pieces were prepared and two measurements were taken from each of them. The average of the total of four measurements was adopted as their water vapor transmission rate.

Subsequently, as a second olefin layer, an unstretched polypropylene film (ZK100, manufactured by Toray Advanced Film Co., Ltd.) with a thickness of 60 µm was attached to the protective layer side of the laminated body according to the present invention, with an adhesive composed of a polyester urethane based main agent (LX500, manufactured by DIC Corporation) and an aromatic isocyanate curing agent (KW75, manufactured by DIC Corporation) being interposed in between. The layers were then aged in an oven heated at 40°C for 3 days to cure the adhesive, thereby producing a composite laminated body A.

Next, an unstretched polypropylene film (ZK100, manufactured by Toray Advanced Film Co., Ltd.) with a thickness of 60 µm was prepared as a second olefin layer, and a biaxially stretched polypropylene film (FOR, manufactured by Futamura Chemical Co., Ltd.) with a thickness of 20 µm was prepared as a third olefin layer. The corona-treated surface side of the biaxially stretched polypropylene film prepared as a third olefin layer was laminated to the protective layer side of the laminated body according to the present invention, with an adhesive composed of a polyester urethane based main agent (LX500, manufactured by DIC Corporation) and an aromatic isocyanate curing agent (KW75, manufactured by DIC Corporation) being interposed in between. Subsequently, an unstretched polypropylene film (ZK100, manufactured by Toray Advanced Film Co., Ltd.) with a thickness of 60 µm, prepared as a second olefin layer, was attached to the substrate side, i.e. opposite to the protective layer side, of the laminated body, with an adhesive composed of a polyester urethane based main agent (LX500, manufactured by DIC Corporation) and an aromatic isocyanate curing agent (KW75, manufactured by DIC Corporation) being interposed in between. The layers were then aged in an oven heated at 40°C for 3 days to cure the adhesive, thereby producing a composite laminated body B.

Then, the composite laminated bodies A and B were subjected to retort sterilization treatment (high temperature hot water treatment) at 130°C for 30 minutes to produce a retort-treated composite laminated bodies A and B for barrier properties evaluation. According to the same procedure as described above, two measurements were taken from each of two test pieces, and the average of the total of four measurements was adopted as the post-retorting oxygen transmission rate or the post-retorting water vapor transmission rate.

### (7) Adhesiveness evaluation (lamination strength)

Adhesiveness evaluation was carried out according to the procedure described below.

First, the composite laminated bodies A and B prepared in the section (6) were cut into strips having a width of 15 mm and a length of 150 mm to provide composite laminated bodies A and B for adhesiveness evaluation. Then, they were subjected to peel strength measurement using a tensile testing machine (Tensilon) at a peeling rate of 50 mm/min in such a manner that for the composite laminated body A for adhesiveness evaluation, the peel angle between the laminated body according to the present invention and the unstretched polypropylene film, i.e. the second olefin layer, was 180° while for the composite laminated body B for adhesiveness evaluation, the peel angle between the laminated body according to the present invention and the biaxially stretched polypropylene film, i.e. the third olefin layer, was 180°. Measurements were taken from three samples by the measurement method described above, and the average of these measurements was adopted as the initial lamination strength of the composite laminated body A or B. Furthermore, the composite laminated bodies A and B were subjected to retort sterilization treatment at 130°C for 30 minutes, and as in the above case, they were cut to 15 mm in width and 150 mm in length, followed by measuring the peel strength from three samples. For the composite laminated bodies A and B, the average of the measurements was adopted as post-retorting lamination strength.

### (8) Thermal shrinkage rate

The laminated body according to the present invention and the second and third olefin layers were each cut into 200 mm × 200 mm squares. Lines having a length of 100 mm were drawn in the MD direction (traveling direction) and in the TD direction (the direction at an angle of 90 degrees to the MD direction). The lengths of the lines in the MD and TD directions were measured using a projector (PJ-H3000, manufactured by Mitutoyo Corporation) and adopted as pre-heating lengths. Furthermore, the laminated body and the second and third olefin layers were heated separately at 120°C for 15 minutes, and thereafter, the lengths of the lines in the MD and TD directions were measured in the same manner as above using a projector (PJ-H3000, manufactured by Mitutoyo Corporation) and adopted as post-heating lengths. The thermal shrinkage rate in the MD direction and that in the TD direction were calculated by the equation (1). 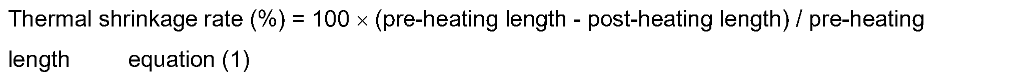 Thermal shrinkage rate (%) = 100 × (pre-heating length - post-heating length) / pre-heating length equation (1)

Next, among the thermal shrinkage rates of the laminated body, the second olefin layer, and the third olefin layer present in the composite laminated body, the smallest values were compared with one another and the largest values were also compared with one another. The composite laminated body was judged to be acceptable when the thermal shrinkage rate of either or both the second olefin layer and the third olefin layer was smaller than that of the laminated body. This is because a packaging having reduced curling and wrinkling and exhibiting desirable physical properties such as gas barrier properties can be obtained more easily when the thermal shrinkage rate of either or both the second olefin layer and the third olefin layer is smaller than that of the laminated body. The composite laminated body was judged to be unacceptable when the thermal shrinkage rate of both the second olefin layer and the third olefin layer were equal to or larger than the laminated body.

### (9) Average composition ratio (Si/C) of silicon element (Si) and carbon element (C) in protective layer

First, compositional analysis was conducted by X-ray photoelectron spectroscopy (XPS) under the conditions given below in the depth direction from the protective layer surface side of the laminated body, and the film structure was determined based on the depth profile. After ion etching was performed, starting from the protective layer side until reaching the inorganic layer, while collecting data, and the resulting depth profile of each element was examined to determine the presence or absence of a continuous increase or decrease in its content. Regarding the presence or absence of a continuous increase or decrease, the existence of a continuous increase or decrease was judged according to whether the length of the increase or decrease extends over 2 nm or more.

First, the thickness of the protective layer was measured by the method described in the section (2). The depth corresponding to the distance from the protective layer surface to the interface with the inorganic layer, which is determined based on the depth profile showing the change in the composition ratio in the depth direction analyzed by X-ray photoelectron spectroscopy (XPS), was defined as the thickness of the protective layer. The composition ratio was measured at different points aligned in the thickness direction in the range extending over one-third of the protective layer thickness, and the average of the measurements was adopted as the average composition ratio (Si/C).

The measuring conditions used were as described below.
- Instrument: X-ray photoelectron spectrometer (Quantera SXM, manufactured by PHI)
- Excited X-ray: monochromatic AlKα_{1,2} lines (1486.6 eV)
- X-ray diameter: 100 µm
- Photoelectron take-off angle: 45° (inclination of detector from specimen surface)
- Ion etching conditions: Ar⁺ ion 3 kV
- Raster size: 2 × 2 mm (etching region)
- Etching rate: 12.0 nm/min

### [Example 1]

### <Inorganic layer>

A uniaxially stretched polyethylene film having a thickness of 25 µm (PE3K-BT, manufactured by Futamura Chemical Co., Ltd.) was adopted as substrate film and its surface was subjected to corona treatment. Then, an aluminum oxide layer having a thickness of 15 nm was deposited thereon by the vacuum deposition technique to form an inorganic layer.

### <Protective layer>

### (Solution of organic component)

Polyvinyl alcohol (polymerization degree 1,700, saponification degree 98.5%), adopted as water soluble resin, was added into a solvent composed of water and isopropyl alcohol mixed at 97/3 by mass, and heated while stirring at 90°C to provide an organic component solution having a solid content of 12 mass%.

### (Solution of inorganic component)

A solution was prepared by mixing 11.7 g of KBM-585A (manufactured by Shin-Etsu Chemical Co., Ltd.), which is a silicon alkoxide having a ureido group, and 4.7 g of methanol, and then, 18.6 g of aqueous 0.02N hydrochloric acid solution was added dropwise while stirring, thereby providing a hydrolysis solution of a silicon alkoxide having a ureido group (hydrolysis solution A).

Subsequently, another solution was prepared by mixing 11.2 g of Ethyl Silicate 40 (manufactured by Colcoat Co., Ltd., linear oligomer with average length of pentamer), which is a linear polysiloxane, and 16.9 g of methanol, and then, 7.0 g of aqueous 0.06N hydrochloric acid solution was added dropwise to provide a hydrolysis solution of a pentamer silicate (hydrolysis solution B).

### (Formation of protective layer)

The organic component solution, hydrolysis solution A, and hydrolysis solution B were mixed in such a manner that the content of PVA was 20 mass%, that the silicon alkoxide having a ureido group accounted for a solid content of 2.0 mass%, and that the mass ratio in terms of SiO₂ between the linear polysiloxane and the silicon alkoxide was 97/3. The mixture was stirred and then diluted with water to provide a coating solution having a solid content of 12 mass%. This coating solution was applied on the inorganic layer and dried at 80°C to form a protective layer having a dried thickness of 100 nm, thereby providing a laminated body.

### [Example 2]

### <Inorganic layer>

A biaxially stretched polypropylene film having a thickness of 20 µm (OP ME-1, manufactured by Mitsui Chemicals Tohcello, Inc.) was adopted as substrate film and its surface was subjected to corona treatment. The, an aluminum oxide layer having a thickness of 15 nm was deposited thereon by the vacuum deposition technique to form an inorganic layer.

### <Protective layer>

### (Solution of organic component)

In the same manner as in Example 1, an organic component solution containing PVA was prepared.

### (Solution of inorganic component)

In the same manner as in Example 1, a hydrolysis solution of a silicon alkoxide having a ureido group (hydrolysis solution A) and a pentamer silicate hydrolysis solution (hydrolysis solution B) were prepared.

### (Formation of protective layer)

In the same manner as in Example 1, a protective layer having a dried thickness of 100 nm was formed, and it was adopted as a laminated body.

### [Example 3]

### <Inorganic layer>

A biaxially stretched polypropylene film having a thickness of 20 µm (OP ME-1, manufactured by Mitsui Chemicals Tohcello, Inc.) was adopted as substrate film and its surface was subjected to corona treatment. An aluminum oxide layer having a thickness of 15 nm was deposited thereon by the vacuum deposition technique to form an inorganic layer.

### <Protective layer>

### (Solution of organic component)

In the same manner as in Example 1, an organic component solution containing PVA was prepared.

### (Solution of inorganic component)

In the same manner as in Example 1, a hydrolysis solution of a silicon alkoxide having a ureido group (hydrolysis solution A) and a hydrolysis solution of pentamer silicate (hydrolysis solution B) were prepared.

### (Formation of protective layer)

In the same manner as in Example 1, a protective layer having a dried thickness of 100 nm was formed, and it was adopted as a laminated body.

### [Example 4]

### <Inorganic layer>

A biaxially stretched polypropylene film having a thickness of 20 µm (OP ME-1, manufactured by Mitsui Chemicals Tohcello, Inc.) was prepared as a substrate film, and then, as an anchor layer to cover the substrate film, a resin composition prepared by mixing a polyester based resin (Takelac A-3210, manufactured by Mitsui Chemicals, Inc.) and an aliphatic isocyanate based curing agent (Takelac A-3070, manufactured by Mitsui Chemicals, Inc.) at a weight ratio of 3:1 was spread on the substrate film, dried at 80°C, and aged at 40°C for 72 hours to form an anchor layer having a thickness of 400 nm. Subsequently, an aluminum oxide layer having a thickness of 15 nm was formed on the anchor layer by the vacuum deposition technique, thereby providing an inorganic layer.

### <Protective layer>

### (Solution of organic component)

In the same manner as in Example 1, an organic component solution containing PVA was prepared.

### (Solution of inorganic component)

In the same manner as in Example 1, a hydrolysis solution of a silicon alkoxide having a ureido group (hydrolysis solution A) and a hydrolysis solution of pentamer silicate (hydrolysis solution B) were prepared.

### (Formation of protective layer)

In the same manner as in Example 1, a protective layer having a dried thickness of 100 nm was formed, and it was adopted as a laminated body.

### [Example 5]

### <Inorganic layer>

In the same manner as in Example 4, an inorganic layer was prepared.

### <Protective layer>

### (Solution of organic component)

A modified polyvinyl alcohol that included γ-butyrolactone having a lactone structure as a carbonyl group-containing cyclic structure (hereinafter occasionally referred to as modified PVA, polymerization degree 1,700, saponification degree 93.0%), which was adopted as water soluble resin, was added into a solvent composed of water and isopropyl alcohol mixed at 97/3 by mass, and the mixture was heated while stirring at 90°C to provide an organic component solution having a solid content of 12 mass%.

### (Solution of inorganic component)

In the same manner as in Example 1, a hydrolysis solution of a silicon alkoxide having a ureido group (hydrolysis solution A) and a hydrolysis solution of pentamer silicate (hydrolysis solution B) were prepared.

### (Formation of protective layer)

The organic component solution, hydrolysis solution A, and hydrolysis solution B were mixed in such a manner that the content of the modified PVA was 20 mass%, that the silicon alkoxide having a ureido group accounted for a solid content of 2.0 mass%, and that the mass ratio in terms of SiO₂ between the linear polysiloxane and the silicon alkoxide was 97/3. The mixture was stirred and then diluted with water to provide a coating solution having a solid content of 12 mass%. This coating solution was applied on the inorganic layer and dried at 80°C to form a protective layer having a dried thickness of 100 nm, thereby providing a laminated body.

### [Example 6]

### <Inorganic layer>

In the same manner as in Example 4, an inorganic layer was prepared.

### <Protective layer>

### (Solution of organic component)

In the same manner as in Example 5, an organic component solution containing the modified PVA was prepared.

### (Solution of inorganic component)

In the same manner as in Example 1, a hydrolysis solution of a silicon alkoxide having a ureido group (hydrolysis solution A) was prepared.

Then, a solution composed of 11.2 g of Ethyl Silicate 48 (manufactured by Colcoat Co., Ltd., linear oligomer with average length of decamer), which was adopted as a linear polysiloxane, and 16.9 g of methanol was prepared, and 7.0 g of aqueous 0.06N hydrochloric acid solution was added dropwise to provide a hydrolysis solution of a decamer silicate (hydrolysis solution B).

### (Formation of protective layer)

The organic component solution, hydrolysis solution A, and hydrolysis solution B was mixed in such a manner that the content of the modified PVA was 30 mass%, that the silicon alkoxide having a ureido group accounted for a solid content of 3.2 mass%, and that the mass ratio in terms of SiO₂ between the linear polysiloxane and the silicon alkoxide was 95/5. The mixture was stirred and then diluted with water to provide a coating solution having a solid content of 12 mass%. This coating solution was applied on the inorganic layer and dried at 80°C to form a protective layer having a dried thickness of 350 nm, thereby providing a laminated body.

### [Example 7]

### <Inorganic layer>

In the same manner as in Example 4, an inorganic layer was prepared.

### <Protective layer>

### (Solution of organic component)

In the same manner as in Example 5, an organic component solution containing the modified PVA was prepared.

### (Solution of inorganic component)

In the same manner as in Example 1, a hydrolysis solution of a silicon alkoxide having a ureido group (hydrolysis solution A) was prepared.

Then, a solution composed of 11.2 g of Methyl Silicate 51 (manufactured by Colcoat Co., Ltd., linear oligomer with average length of tetramer), which was adopted as a linear polysiloxane, and 16.9 g of methanol was prepared, and 7.0 g of aqueous 0.06N hydrochloric acid solution was added dropwise to provide a hydrolysis solution of a tetramer silicate (hydrolysis solution B).

Next, a solution was prepared by mixing 11.7 g of KBE-04 (tetraethoxysilane, manufactured by Shin-Etsu Chemical Co., Ltd.), which was adopted as a silicon alkoxide having no ureido group, and 4.7 g of methanol, and then, 18.6 g of aqueous 0.02N hydrochloric acid solution was added dropwise while stirring, thereby providing a hydrolysis solution of a silicon alkoxide having no ureido group (hydrolysis solution C).

### (Formation of protective layer)

The organic component solution, hydrolysis solution A, hydrolysis solution B, and hydrolysis solution C were mixed in such a manner that the content of the modified PVA was 30 mass%, that the silicon alkoxide having a ureido group accounted for a solid content of 3.2 mass%, and that the mass ratio in terms of SiO₂ between the linear polysiloxane and the silicon alkoxide was 15/85. The mixture was stirred and then diluted with water to provide a coating solution having a solid content of 12 mass%. This coating solution was applied on the inorganic layer and dried at 80°C to form a protective layer having a dried thickness of 500 nm, thereby providing a laminated body.

### [Example 8]

### <Inorganic layer>

In the same manner as in Example 4, an inorganic layer was prepared.

### <Protective layer>

### (Solution of organic component)

In the same manner as in Example 5, an organic component solution containing the modified PVA was prepared.

### (Solution of inorganic component)

In the same manner as in Example 1, a hydrolysis solution of a silicon alkoxide having a ureido group (hydrolysis solution A) was prepared.

Then, a solution composed of 11.2 g of Methyl Silicate 53A (manufactured by Colcoat Co., Ltd., linear oligomer with average length of heptamer), which was adopted as a linear polysiloxane, and 16.9 g of methanol was prepared, and 7.0 g of aqueous 0.06N hydrochloric acid solution was added dropwise to provide a hydrolysis solution of a heptamer silicate (hydrolysis solution B).

Then, in the same manner as in Example 7, a hydrolysis solution of a silicon alkoxide having no ureido group (hydrolysis solution C) was prepared.

### (Formation of protective layer)

The organic component solution, hydrolysis solution A, hydrolysis solution B, and hydrolysis solution C were mixed in such a manner that the content of the modified PVA was 30 mass%, that the silicon alkoxide having a ureido group accounted for a solid content of 3.2 mass%, and that the mass ratio in terms of SiO₂ between the linear polysiloxane and the silicon alkoxide was 15/85. The mixture was stirred and then diluted with water to provide a coating solution having a solid content of 12 mass%. This coating solution was applied on the inorganic layer and dried at 80°C to form a protective layer having a dried thickness of 500 nm, thereby providing a laminated body.

### [Example 9]

### <Inorganic layer>

In the same manner as in Example 4, an inorganic layer was prepared.

### <Protective layer>

### (Solution of organic component)

In the same manner as in Example 5, an organic component solution containing the modified PVA was prepared.

### (Solution of inorganic component)

In the same manner as in Example 1, a hydrolysis solution of a silicon alkoxide having a ureido group (hydrolysis solution A) was prepared.

Then, in the same manner as in Example 6, a hydrolysis solution of a decamer silicate (hydrolysis solution B) was prepared.

Then, in the same manner as in Example 7, a hydrolysis solution of a silicon alkoxide having no ureido group (hydrolysis solution C) was prepared.

### (Formation of protective layer)

The organic component solution, hydrolysis solution A, hydrolysis solution B, and hydrolysis solution C were mixed in such a manner that the content of the modified PVA was 50 mass%, that the silicon alkoxide having a ureido group accounted for a solid content of 5.5 mass%, and that the mass ratio in terms of SiO₂ between the linear polysiloxane and the silicon alkoxide was 50/50. The mixture was stirred and then diluted with water to provide a coating solution having a solid content of 12 mass%. This coating solution was applied on the inorganic layer and dried at 80°C to form a protective layer having a dried thickness of 250 nm, thereby providing a laminated body.

### [Example 10]

### <Inorganic layer>

In the same manner as in Example 4, an inorganic layer was prepared.

### <Protective layer>

### (Solution of organic component)

In the same manner as in Example 5, an organic component solution containing the modified PVA was prepared.

### (Solution of inorganic component)

In the same manner as in Example 1, a hydrolysis solution of a silicon alkoxide having a ureido group (hydrolysis solution A) was prepared.

Then, in the same manner as in Example 6, a hydrolysis solution of a decamer silicate (hydrolysis solution B) was prepared.

Then, in the same manner as in Example 7, a hydrolysis solution of a silicon alkoxide having no ureido group (hydrolysis solution C) was prepared.

### (Formation of protective layer)

The organic component solution, hydrolysis solution A, hydrolysis solution B, and hydrolysis solution C were mixed in such a manner that the content of the modified PVA was 30 mass%, that the silicon alkoxide having a ureido group accounted for a solid content of 8.4 mass%, and that the mass ratio in terms of SiO₂ between the linear polysiloxane and the silicon alkoxide was 60/40. The mixture was stirred and then diluted with water to provide a coating solution having a solid content of 12 mass%. This coating solution was applied on the inorganic layer and dried at 80°C to form a protective layer having a dried thickness of 250 nm, thereby providing a laminated body.

### [Example 11]

### <Inorganic layer>

In the same manner as in Example 4, an inorganic layer was prepared.

### <Protective layer>

### (Solution of organic component)

In the same manner as in Example 5, an organic component solution containing the modified PVA was prepared.

### (Solution of inorganic component)

In the same manner as in Example 1, a hydrolysis solution of a silicon alkoxide having a ureido group (hydrolysis solution A) was prepared.

Then, in the same manner as in Example 6, a hydrolysis solution of a decamer silicate (hydrolysis solution B) was prepared.

Then, in the same manner as in Example 7, a hydrolysis solution of a silicon alkoxide having no ureido group (hydrolysis solution C) was prepared.

### (Formation of protective layer)

The organic component solution, hydrolysis solution A, hydrolysis solution B, and hydrolysis solution C were mixed in such a manner that the content of the modified PVA was 30 mass%, that the silicon alkoxide having a ureido group accounted for a solid content of 8.4 mass%, and that the mass ratio in terms of SiO₂ between the linear polysiloxane and the silicon alkoxide was 40/60. The mixture was stirred and then diluted with water to provide a coating solution having a solid content of 12 mass%. This coating solution was applied on the inorganic layer and dried at 80°C to form a protective layer having a dried thickness of 250 nm, thereby providing a laminated body.

### [Example 12]

### <Inorganic layer>

In the same manner as in Example 4, an inorganic layer was prepared.

### <Protective layer>

### (Solution of organic component)

In the same manner as in Example 5, an organic component solution containing the modified PVA was prepared.

### (Solution of inorganic component)

In the same manner as in Example 1, a hydrolysis solution of a silicon alkoxide having a ureido group (hydrolysis solution A) was prepared.

Then, in the same manner as in Example 6, a hydrolysis solution of a decamer silicate (hydrolysis solution B) was prepared.

Then, in the same manner as in Example 7, a hydrolysis solution of a silicon alkoxide having no ureido group (hydrolysis solution C) was prepared.

### (Formation of protective layer)

The organic component solution, hydrolysis solution A, hydrolysis solution B, and hydrolysis solution C were mixed in such a manner that the content of the modified PVA was 30 mass%, that the silicon alkoxide having a ureido group accounted for a solid content of 7.8 mass%, and that the mass ratio in terms of SiO₂ between the linear polysiloxane and the silicon alkoxide was 40/60. The mixture was stirred and then diluted with water to provide a coating solution having a solid content of 12 mass%. This coating solution was applied on the inorganic layer and dried at 80°C to form a protective layer having a dried thickness of 250 nm, thereby providing a laminated body.

### [Example 13]

### <Inorganic layer>

In the same manner as in Example 4, an inorganic layer was prepared.

### <Protective layer>

### (Solution of organic component)

In the same manner as in Example 5, an organic component solution containing the modified PVA was prepared.

### (Solution of inorganic component)

In the same manner as in Example 1, a hydrolysis solution of a silicon alkoxide having a ureido group (hydrolysis solution A) was prepared.

Then, in the same manner as in Example 6, a hydrolysis solution of a decamer silicate (hydrolysis solution B) was prepared.

Then, in the same manner as in Example 7, a hydrolysis solution of a silicon alkoxide having no ureido group (hydrolysis solution C) was prepared.

### (Formation of protective layer)

The organic component solution, hydrolysis solution A, hydrolysis solution B, and hydrolysis solution C were mixed in such a manner that the content of the modified PVA was 30 mass%, that the silicon alkoxide having a ureido group accounted for a solid content of 3.2 mass%, and that the mass ratio in terms of SiO₂ between the linear polysiloxane and the silicon alkoxide was 40/60. The mixture was stirred and then diluted with water to provide a coating solution having a solid content of 12 mass%. This coating solution was applied on the inorganic layer and dried at 80°C to form a protective layer having a dried thickness of 250 nm, thereby providing a laminated body.

### [Example 14]

### <Inorganic layer>

In the same manner as in Example 4, an anchor layer was formed on a substrate film. Next, in a roll-to-roll vacuum deposition apparatus, aluminum was evaporated from a crucible type aluminum evaporation source heated by high frequency induction heating and deposited on the substrate film being unwound, thereby allowing aluminum to be attached to the anchor layer on the substrate film. In the path along which the substrate film traveled while receiving evaporated aluminum on the anchor layer, oxygen gas was supplied to a position highly close to the winding end so that an inorganic layer was formed continuously in such a manner that the aluminum metal layer had a thickness of 40 nm while the aluminum oxide layer had a thickness of 4 nm. The measurement of the aluminum metal layer thickness and the aluminum oxide layer thickness was conducted by the following procedure.

First, compositional analysis in the depth direction was conducted by X-ray photoelectron spectroscopy (XPS) and the structure of the inorganic film was determined based on depth profiles. Here, for the metal elements, the oxide components and the metal components were separated in developing profiles. After starting ion etching from the resin layer and protective layer side surface, data collection was continued until the substrate was reached, and the resulting depth profile of each element was used to examine the presence or absence of a continuous increase or decrease in the composition. Here, regarding the presence or absence of a continuous increase or decrease, the existence of a continuous increase or decrease was judged according to whether the length of the increase or decrease extends over 2 nm or more.

The measuring conditions used were as described below.
- Instrument: X-ray photoelectron spectrometer (Quantera SXM, manufactured by PHI)
- Excited X-ray: monochromatic AlKα_{1,2} lines (1486.6 eV)
- X-ray diameter: 100 µm
- Photoelectron take-off angle: 45° (inclination of detector from specimen surface)
- Ion etching conditions: Ar⁺ ion 3 kV
- Raster size: 2 × 2 mm (etching region)
- Etching rate: 12.0 nm/min

Then, the total thickness of the inorganic layer was determined by the procedure described above. The film thickness of the aluminum metal layer and that of the aluminum oxide layer were calculated from the total thickness of the inorganic layer and the region attributed to the inorganic layer in the depth profile.

### <Protective layer>

### (Solution of organic component)

In the same manner as in Example 5, an organic component solution containing the modified PVA was prepared.

### (Solution of inorganic component)

In the same manner as in Example 1, a hydrolysis solution of a silicon alkoxide having a ureido group (hydrolysis solution A) was prepared.

Then, in the same manner as in Example 6, a hydrolysis solution of a decamer silicate (hydrolysis solution B) was prepared.

Then, in the same manner as in Example 7, a hydrolysis solution of a silicon alkoxide having no ureido group (hydrolysis solution C) was prepared.

### (Formation of protective layer)

The organic component solution, hydrolysis solution A, hydrolysis solution B, and hydrolysis solution C were mixed in such a manner that the content of the modified PVA was 30 mass%, that the silicon alkoxide having a ureido group accounted for a solid content of 3.2 mass%, and that the mass ratio in terms of SiO₂ between the linear polysiloxane and the silicon alkoxide was 40/60. The mixture was stirred and then diluted with water to provide a coating solution having a solid content of 12 mass%. This coating solution was applied on the inorganic layer and dried at 80°C to form a protective layer having a dried thickness of 250 nm, thereby providing a laminated body.

### [Example 15]

### <Inorganic layer>

In the same manner as in Example 4, an inorganic layer was prepared.

### <Protective layer>

### (Solution of organic component)

In the same manner as in Example 5, an organic component solution containing the modified PVA was prepared.

### (Solution of inorganic component)

In the same manner as in Example 1, a hydrolysis solution of a silicon alkoxide having a ureido group (hydrolysis solution A) was prepared.

Then, in the same manner as in Example 7, a hydrolysis solution of a silicon alkoxide having no ureido group (hydrolysis solution C) was prepared.

### (Formation of protective layer)

The organic component solution, hydrolysis solution A, and hydrolysis solution C were mixed in such a manner that the content of the modified PVA was 30 mass%, that the silicon alkoxide having a ureido group accounted for a solid content of 3.2 mass%, and that the addition of a linear polysiloxane was omitted. The mixture was stirred and then diluted with water to provide a coating solution having a solid content of 12 mass%. This coating solution was applied to the inorganic layer and dried at 80°C to form a protective layer containing no linear polysiloxane and having an dried thickness of 350 nm (the mass ratio in terms of SiO₂ between linear polysiloxane and silicon alkoxide was 0/100), thereby providing a laminated body. Because no linear polysiloxane was contained, this laminated body according to the present invention was inferior in terms of post-retorting gas barrier properties and adhesiveness.

### [Example 16]

### <Inorganic layer>

In the same manner as in Example 4, an inorganic layer was prepared.

### <Protective layer>

### (Solution of organic component)

In the same manner as in Example 5, an organic component solution containing the modified PVA was prepared.

### (Solution of inorganic component)

In the same manner as in Example 6, a hydrolysis solution of a decamer silicate (hydrolysis solution B) was prepared.

Then, in the same manner as in Example 7, a hydrolysis solution of a silicon alkoxide having no ureido group (hydrolysis solution C) was prepared.

### (Formation of protective layer)

Only the hydrolysis solution B and hydrolysis solution C were mixed in such a manner that the content of the modified PVA was 30 mass%, that the addition of a silicon alkoxide having a ureido group was omitted, and that the mass ratio in terms of SiO₂ between the linear polysiloxane and the silicon alkoxide (only tetraethoxysilane) was 40/60. The mixture was stirred and then diluted with water to provide a coating solution having a solid content of 12 mass%. This coating solution was applied to the inorganic layer and dried at 80°C to form a protective layer having a dried thickness of 350 nm and containing no silicon alkoxide having a ureido group, thereby providing a laminated body, but it was inferior in adhesiveness.

### [Example 17]

As a second olefin layer, an unstretched polypropylene film having a thickness of 60 µm (ZK100, manufactured by Toray Advanced Film Co., Ltd.), was prepared and annealed at 100°C for 1 minute. Subsequently, a laminated body was formed in the same manner as in Example 14, and on its protective layer side, the above-mentioned annealed unstretched polypropylene film was laid as a second olefin layer, with an adhesive composed of a polyester urethane based main agent (LX500, manufactured by DIC Corporation) and an aromatic isocyanate curing agent (KW75, manufactured by DIC Corporation) being interposed in between, followed by aging in an oven heated at 40°C for 3 days to cure the adhesive, thereby providing a composite laminated body A'. The composite laminated body A' was judged to be unacceptable in terms of heat shrinkage rate.

### [Example 18]

As a third olefin layer, a biaxially stretched polypropylene film having a thickness of 20 µm (FOR, manufactured by Futamura Chemical Co., Ltd.) was prepared and annealed at 100°C for 1 minute. Subsequently, a laminated body was formed in the same manner as in Example 14, and an unstretched polypropylene film having a thickness of 60 µm (ZK100, manufactured by Toray Advanced Film Co., Ltd.) was prepared as a second olefin layer while the above-mentioned annealed biaxially stretched polypropylene film was prepared as a third olefin layer. The corona-treated surface of the annealed biaxially stretched polypropylene film formed as the third olefin layer was attached to the protective layer side of the laminated body according to the present invention, with an adhesive composed of a polyester urethane based main agent (LX500, manufactured by DIC Corporation) and an aromatic isocyanate curing agent (KW75, manufactured by DIC Corporation) being interposed in between. Then the unstretched polypropylene film having a thickness of 60 µm prepared as the second olefin layer was attached to the substrate side, which is located opposite to the protective layer, of the laminated body, with an adhesive composed of a polyester urethane based main agent (LX500, manufactured by DIC Corporation) and an aromatic isocyanate curing agent (KW75, manufactured by DIC Corporation) being interposed in between, followed by aging in an oven heated at 40°C for 3 days to cure the adhesive, thereby providing a composite laminated body B'. The composite laminated body B' was judged to be unacceptable in terms of heat shrinkage rate.

### [Comparative example 1]

An evaluation was conducted for a laminated body having the same inorganic layer as described in Example 1 but not having a protective layer. The laminated body was found to be inferior in terms of gas barrier properties, post-retorting gas barrier properties, and adhesiveness.

### [Comparative example 2]

### <Inorganic layer>

In the same manner as in Example 4, an inorganic layer was prepared.

### <Protective layer>

### (Solution of organic component)

### None

### (Solution of inorganic component)

In the same manner as in Example 1, a hydrolysis solution of a silicon alkoxide having a ureido group (hydrolysis solution A) was prepared.

Then, in the same manner as in Example 6, a hydrolysis solution of a decamer silicate (hydrolysis solution B) was prepared.

### (Formation of protective layer)

Without using a water soluble resin, only the hydrolysis solution A and hydrolysis solution B were mixed in such a manner that the silicon alkoxide having a ureido group accounted for a solid content of 2.0 mass% and that the mass ratio in terms of SiO₂ between the linear polysiloxane and the silicon alkoxide was 98/2. The mixture was stirred and then diluted with water to provide a coating solution having a solid content of 12 mass%. This coating solution was applied to the inorganic layer and dried at 80°C to form a protective layer containing no water soluble resin and having a dried thickness of 350 nm, thereby providing a laminated body. The protective layer suffered from the generation of cracks and its evaluation was impossible.

### [Comparative example 3]

### <Inorganic layer>

In the same manner as in Example 4, an inorganic layer was prepared.

### <Protective layer>

### (Solution of organic component)

In the same manner as in Example 1, an organic component solution containing PVA was prepared.

### (Solution of inorganic component)

### None

### (Formation of protective layer)

Without using the silicon based components, i.e. the silicon alkoxide, the linear polysiloxane, and the silicon alkoxide having a ureido group, only the organic component solution containing PVA was applied to the inorganic layer and dried at 80°C to form a protective layer having a dried thickness of 350 nm and including only water soluble resin, thereby providing a laminated body. However, the laminated body was inferior in terms of gas barrier properties, post-retorting gas barrier properties, and adhesiveness.

### [Comparative example 4]

### <Inorganic layer>

In the same manner as in Example 4, an inorganic layer was prepared.

### <Protective layer>

### (Solution of organic component)

In the same manner as in Example 1, an organic component solution containing PVA was prepared.

### (Solution of inorganic component)

In the same manner as in Example 1, a hydrolysis solution of a silicon alkoxide having a ureido group (hydrolysis solution A) and a hydrolysis solution of pentamer silicate (hydrolysis solution B) were prepared.

### (Formation of protective layer)

The organic component solution, hydrolysis solution A, and hydrolysis solution B were mixed in such a manner that the content of PVA was 15 mass%, that the silicon alkoxide having a ureido group accounted for a solid content of 2.0 mass%, and that the mass ratio in terms of SiO₂ between the linear polysiloxane and the silicon alkoxide was 97/3. The mixture was stirred and then diluted with water to provide a coating solution having a solid content of 12 mass%. This coating solution was applied on the inorganic layer and dried at 80°C to form a protective layer having a dried thickness of 100 nm, thereby providing a laminated body. The average composition ratio (Si/C) of this protective layer in the laminated body was as large as 2.44, resulting in poor gas barrier properties.

### [Comparative example 5]

### <Inorganic layer>

In the same manner as in Example 4, an inorganic layer was prepared.

### <Protective layer>

### (Solution of organic component)

In the same manner as in Example 1, an organic component solution containing PVA was prepared.

### (Solution of inorganic component)

In the same manner as in Example 1, a hydrolysis solution of a silicon alkoxide having a ureido group (hydrolysis solution A) and a hydrolysis solution of pentamer silicate (hydrolysis solution B) were prepared.

### (Formation of protective layer)

The organic component solution, hydrolysis solution A, and hydrolysis solution B were mixed in such a manner that the content of PVA was 82 mass%, that the silicon alkoxide having a ureido group accounted for a solid content of 2.0 mass%, and that the mass ratio in terms of SiO₂ between the linear polysiloxane and the silicon alkoxide was 97/3. The mixture was stirred and then diluted with water to provide a coating solution having a solid content of 12 mass%. This coating solution was applied on the inorganic layer and dried at 80°C to form a protective layer having a dried thickness of 100 nm, thereby providing a laminated body. The average composition ratio (Si/C) of this protective layer in the laminated body was as small as 1.21, resulting in poor gas barrier properties.

For each Example and Comparative example, the composition of the laminated body is shown in Table 1 and the properties of the laminated body are shown in Table 2. The properties of the composite laminated body are shown in Tables 3 and 4.

### [Table 1]

**[Table 1]**

| | substrate | anchor layer | inorganic layer | protective layer | | | | | | | | |
|---|---|---|---|---|---|---|---|---|---|---|---|---|
| | | | | water soluble resin | | linear polysiloxane | silicon alkoxide | | | mass ratio of linear polysiloxane/silic on alkoxide A2/A1 (mass ratio in terms of SiO₂) | thickness [nm] | average composition ratio (Si/C) |
| | | | | type | content [mass% ] | | silicon alkoxide having ureido group | | other silicon alkoxide | | | |
| | | | | | | | present/absent | solid content ratio [%] | | | | |
| Example 1 | polyethylene film | none | aluminum oxide | PVA | 20 | linear (pentamer) | present | 2 | none | 97/3 | 100 | 2.27 |
| Example 2 | polypropylene film | none | aluminum oxide | PVA | 20 | linear (pentamer) | present | 2 | none | 97/3 | 100 | 2.26 |
| Example 3 | polypropylene film | none | silicon oxide | PVA | 20 | linear (pentamer) | present | 2 | none | 97/3 | 100 | 2.27 |
| Example 4 | polypropylene film | present | aluminum oxide | PVA | 20 | linear (pentamer) | present | 2 | none | 97/3 | 100 | 2.28 |
| Example 5 | polypropylene film | present | aluminum oxide | modified PVA containing γ-butyrolactone structure | 20 | linear (pentamer) | present | 2 | none | 97/3 | 100 | 2.13 |
| Example 6 | polypropyle ne film | present | aluminum oxide | modified PVA containing γ-butyrolactone structure | 30 | linear (decamer) | present | 3.2 | none | 95/5 | 350 | 1.85 |
| Example 7 | polypropyle ne film | present | aluminum oxide | modified PVA containing γ-butyrolactone structure | 30 | linear (tetramer) | present | 3.2 | TEOS | 15/85 | 500 | 1.96 |
| Example 8 | polypropyle ne film | present | aluminum oxide | modified PVA containing γ-butyrolactone structure | 30 | linear (heptamer) | present | 3.2 | TEOS | 15/85 | 500 | 1.98 |
| Example 9 | polypropyle ne film | present | aluminum oxide | modified PVA containing γ-butyrolactone structure | 50 | linear (decamer) | present | 5.5 | TEOS | 50/50 | 250 | 1.34 |
| Example 10 | polypropyle ne film | present | aluminum oxide | modified PVA containing γ-butyrolactone structure | 30 | linear (decamer) | present | 8.4 | TEOS | 60/40 | 250 | 1.83 |
| Example 11 | polypropyle ne film | present | aluminum oxide | modified PVA containing γ-butyrolactone structure | 30 | linear (decamer) | present | 8.4 | TEOS | 40/60 | 250 | 1.79 |
| Example 12 | polypropyle ne film | present | aluminum oxide | modified PVA containing γ-butyrolactone structure | 30 | linear (decamer) | present | 7.8 | TEOS | 40/60 | 250 | 1.75 |
| Example 13 | polypropyle ne film | present | aluminum oxide | modified PVA containing γ-butyrolactone structure | 30 | linear (decamer) | present | 3.2 | TEOS | 40/60 | 250 | 1.81 |
| Example 14 | polypropyle ne film | present | aluminum (surface layer: aluminum oxide) | modified PVA containing γ-butyrolactone structure | 30 | linear (decamer) | present | 3.2 | TEOS | 40/60 | 250 | 1.88 |
| Example 15 | polypropyle ne film | present | aluminum oxide | modified PVA containing γ-butyrolactone structure | 30 | none | present | 3.2 | TEOS | 0/100 | 350 | 1.52 |
| Example 16 | polypropyle ne film | present | aluminum oxide | modified PVA containing γ-butyrolactone structure | 30 | linear (decamer) | none | none | TEOS | 40/60 | 350 | 1.71 |
| Comparati ve example 1 | polyethylen e film | none | aluminum oxide | none | none | none | none | none | none | none | none | - |
| Comparati ve example 2 | polypropyle ne film | present | aluminum oxide | none | none | linear (decamer) | present | 2.0 | none | 98/2 | 350 | 100 or more |
| Comparati ve example 3 | polypropyle ne film | present | aluminum oxide | PVA | 100 | none | none | none | none | none | 350 | 0 |
| Comparative example 4 | polypropyle ne film | present | aluminum oxide | PVA | 15 | linear (pentamer) | present | 2 | none | 97/3 | 100 | 2.44 |
| Comparative example 5 | polypropyle ne film | present | aluminum oxide | PVA | 82 | linear (pentamer) | present | 2 | none | 97/3 | 100 | 1.21 |

### [Table 2]

**[Table 2]**

| | laminated body | | composite laminated body A | | | | composite laminated body B | | | |
|---|---|---|---|---|---|---|---|---|---|---|
| | gas barrier properties | | post-retorting gas barrier properties | | adhesiveness | | post-retorting gas barrier properties | | adhesiveness | |
| | OTR [cc /(m²-day)] | WVTR [g/(m²-day)] | OTR [cc /(m²-day)] | WVTR [g/(m²-day)] | lamination strength [N/15mm] | | OTR [cc /(m²-day)] | WVTR [g/(m²-day)] | lamination strength [N/15mm] | |
| | | | | | initial | post-retorting | | | initial | post-retorting |
| Example 1 | 7.50 | 4.85 | 8.42 | 7.67 | 2.1 | 1.1 | 7.86 | 7.22 | 2.3 | 1.2 |
| Example 2 | 6.75 | 3.99 | 7.58 | 6.31 | 2.0 | 1.0 | 7.08 | 5.94 | 2.2 | 1.1 |
| Example 3 | 6.88 | 3.90 | 7.72 | 6.16 | 1.8 | 0.9 | 7.21 | 5.80 | 2.0 | 1.0 |
| Example 4 | 1.88 | 3.80 | 3.80 | 4.47 | 3.2 | 3.1 | 3.55 | 3.80 | 3.6 | 3.4 |
| Example 5 | 1.63 | 3.52 | 3.20 | 4.26 | 3.3 | 3.1 | 2.99 | 3.62 | 3.7 | 3.5 |
| Example 6 | 1.38 | 3.14 | 3.00 | 4.11 | 3.3 | 3.2 | 2.80 | 3.49 | 3.7 | 3.6 |
| Example 7 | 1.25 | 3.23 | 3.50 | 3.79 | 3.4 | 3.3 | 3.27 | 3.22 | 3.8 | 3.7 |
| Example 8 | 0.25 | 2.85 | 2.80 | 2.63 | 3.4 | 3.3 | 2.61 | 2.24 | 3.8 | 3.7 |
| Example 9 | 0.63 | 2.38 | 1.80 | 2.11 | 3.5 | 3.3 | 1.68 | 1.79 | 3.9 | 3.7 |
| Example 10 | 0.50 | 1.90 | 1.50 | 2.00 | 3.5 | 3.3 | 1.40 | 1.70 | 3.9 | 3.7 |
| Example 11 | 0.38 | 2.00 | 2.00 | 2.11 | 3.6 | 3.4 | 1.87 | 1.79 | 4.0 | 3.8 |
| Example 12 | 0.75 | 2.19 | 2.10 | 2.16 | 3.6 | 3.4 | 1.96 | 1.83 | 4.0 | 3.8 |
| Example 13 | 0.50 | 2.19 | 1.90 | 2.21 | 3.6 | 3.4 | 1.77 | 1.88 | 4.0 | 3.8 |
| Example 14 | 0.38 | 1.14 | 4.70 | 3.79 | 3.5 | 3.2 | 4.39 | 3.22 | 3.9 | 3.6 |
| Example 15 | 6.25 | 3.23 | 7.02 | 5.11 | 3.0 | 2.8 | 6.55 | 4.81 | 3.4 | 3.2 |
| Example 16 | 0.50 | 2.09 | 2.20 | 2.11 | 2.9 | 2.8 | 2.05 | 1.79 | 3.3 | 3.1 |
| Comparative example 1 | 20.0 or more | 20.0 or more | 30.0 or more | 30.0 or more | 2.1 | peeling | 30.0 or more | 30.0 or more | 2.1 | peeling |
| Comparative example 2 | cracking | cracking | cracking | cracking | cracking | cracking | cracking | cracking | cracking | cracking |
| Comparative example 3 | 20.0 or more | 20.0 or more | 30.0 or more | 30.0 or more | 2.5 | peeling | 30.0 or more | 30.0 or more | 2.5 | peeling |
| Comparative example 4 | 9.33 | 6.03 | 10.0 or more | 9.54 | 0.9 | 0.4 | 9.78 | 8.98 | 0.9 | 0.4 |
| Comparative example 5 | 10.0 or more | 10.0 or more | 20.0 or more | 20.0 or more | 2.3 | 0.6 | 20.0 or more | 20.0 or more | 2.2 | 0.3 |

### [Table 3]

**[Table 3]**

| | laminated body | | composite laminated body | | | | |
|---|---|---|---|---|---|---|---|
| | gas barrier properties | | evaluation of heat shrinkage rate | post-retorting gas barrier properties | | adhesiveness | |
| | OTR [cc /(m²-day)] | WVTR [g/(m²-day)] | | OTR [cc /(m²-day)] | WVTR [g/(m²-day)] | lamination strength [N/15mm] | |
| | | | | | | initial | post-retorting |
| Example 14 | 0.38 | 1.14 | acceptable (composite laminated body A) | 4.70 | 3.79 | 3.5 | 3.2 |
| Example 17 | | | unacceptable (composite laminated body A') | 4.47 | 3.68 | 3.3 | 3.1 |

### [Table 4]

**[Table 4]**

| | laminated body | | composite laminated body | | | | |
|---|---|---|---|---|---|---|---|
| | gas barrier properties | | evaluation of heat shrinkage rate | post-retorting gas barrier properties | | adhesiveness | |
| | OTR [cc /(m²-day)] | WVTR [g/(m²-day)] | | OTR [cc /(m²-day)] | WVTR [g/(m²-day)] | lamination strength [N/15mm] | |
| | | | | | | initial | post-retorting |
| Example 14 | 0.38 | 1.14 | acceptable (composite laminated body B) | 4.39 | 3.22 | 3.9 | 3.6 |
| Example 18 | | | unacceptable (composite laminated body B') | 4.21 | 3.09 | 3.7 | 3.5 |

The results obtained in these Examples clearly showed that the laminated body according to the invention has good gas barrier properties and that the composite laminated body that includes this laminated body exhibits good post-retorting gas barrier properties and adhesiveness.

In the case where the polyethylene film used as the olefin based substrate film had an inorganic layer and a protective layer laid thereon and also where the protective layer contained water soluble resin and a silicon alkoxide and had an average composition ratio (Si/C) in the range of 1.30 to 2.30 (Example 1), this resulted in a laminated body that was superior in terms of gas barrier properties, post-retorting gas barrier properties, and adhesiveness in comparison with other laminated bodies having no protective layer (Comparative example 1), those having a protective layer but not containing any of the required components (Comparative examples 2 and 3), or those in which the protective layer failed to have an average composition ratio (Si/C) in the specified range (Comparative examples 4 and 5). Furthermore, even when using another type of olefin based substrate film (Example 3) and when using another type of inorganic layer (Examples 4 and 14), the resulting laminated bodies had good gas barrier properties and post-retorting gas barrier properties as in the above cases. In particular, when an anchor layer was provided (Example 4), the adhesiveness was further improved.

In addition, as compared with Example 1, better gas barrier properties were realized when the water soluble resin present in the protective layer was a vinyl based polymer having a carbonyl group in a cyclic structure (Example 5), and furthermore, not only the gas barrier properties but also the adhesiveness improved when the silicon alkoxide having a ureido group accounted for a solid content of 2.5% or more relative to the solid content of the protective layer (Example 6).

The adhesiveness and the post-retorting gas barrier properties improved when the protective layer contained a silicon alkoxide having no ureido group and when a specific type linear polysiloxane (tetramer, heptamer, etc.) or an appropriate thickness was adopted in the protective layer (Examples 7 and 8). Furthermore, it was possible to vary various physical properties while ensuring improvement in adhesiveness, gas barrier properties, and post-retorting durability characteristics (adhesiveness, gas barrier properties) by properly changing the solid content of the silicon alkoxide having an ureido group in the protective layer or the mass ratio in terms of SiO₂ between the linear polysiloxane and the silicon alkoxide.

On the other hand, when such a protective layer was not present (Comparative example 1), the resulting adhesiveness and gas barrier properties were inferior, or when the protective layer, if present, contained no water soluble resin and failed in having an average composition ratio (Si/C) in the specified range (Comparative example 2), the layers laid thereon caused cracking, making its evaluation impossible. Furthermore, when the protective layer contained no silicon alkoxide and failed to have an average composition ratio (Si/C) in the specified range (Comparative Example 3), the various gas barrier properties and the post-retorting adhesiveness were inferior. In addition, even in the case where both a water soluble resin and a silicon alkoxide were included, at least either the gas barrier properties or the adhesiveness was insufficient, resulting in difficulty in achieving all required physical properties in the resulting composite laminated body, if the average composition ratio (Si/C) failed to be in the specified range (Comparative examples 4 and 5).

In the composite laminated body, furthermore, if either or both of the heat shrinkage rate of the second olefin layer and that of the third olefin layer was lower than that of the composite laminated body (Example 14), results showed that various barrier properties and adhesiveness were superior in comparison with the cases where their heat shrinkage rate was higher (Examples 17 and 18).

## Claims

1. A laminated body comprising an inorganic layer and a protective layer laminated in this order on one side of an olefin based substrate film,
wherein the protective layer contains a water soluble resin and a silicon alkoxide and also wherein the average composition ratio (Si/C) of the silicon element (Si) to the carbon element (C), as measured by X-ray photoelectron spectroscopy (XPS) in the depth direction of the protective layer, starting from the surface of the protective layer opposite to the inorganic layer up to one-third of the total thickness thereof, is in the range of 1.30 to 2.30.

2. A laminated body as set forth in claim 1, wherein the protective layer further comprises a linear polysiloxane.

3. A laminated body as set forth in claim 1, wherein the silicon alkoxide comprises a silicon alkoxide having a ureido group.

4. A laminated body as set forth in claim 1, wherein an anchor layer is present between the olefin based substrate film and the inorganic layer.

5. A laminated body as set forth in claim 1, wherein the inorganic layer comprises aluminum (Al) and/or silicon (Si).

6. A laminated body as set forth in claim 3, wherein the silicon alkoxide having a ureido group accounts for a solid content of 2.5 mass% or more relative to the total solid content of the protective layer.

7. A laminated body as set forth in claim 2, wherein the mass ratio of the linear polysiloxane to the silicon alkoxide present in the protective layer, each represented in terms of SiO₂, is in the linear polysiloxane/silicon alkoxide ratio range of 15/85 to 90/10.

8. A laminated body as set forth in claim 1, wherein the protective layer has a thickness of 100 to 1,000 nm.

9. A laminated body as set forth in claim 1, wherein the inorganic layer comprises aluminum oxide.

10. A composite laminated body comprising a second olefin layer containing an olefin based resin and laminated on at least either side of the laminated body set forth in claim 1, with a resin layer interposed in between.

11. A composite laminated body as set forth in claim 10, wherein the heat shrinkage rate after heating at 120°C for 15 minutes of the second olefin layer is lower than that of the laminated body.

12. A composite laminated body as set forth in claim 10, wherein a third olefin layer containing an olefin based resin is further laminated on at least either of the laminated body side surface and/or the second olefin layer side surface of the composite laminated body, with a resin layer interposed in between.

13. A composite laminated body as set forth in claim 12, wherein the heat shrinkage rate after heating at 120°C for 15 minutes of either or both of the second olefin layer and the third olefin layer is lower than that of the laminated body.

14. A packaging comprising a laminated body as set forth in any one of claims 1 to 9 and/or a composite laminated body as set forth in any one of claims 10 to 13.
